# EUROPEAN PATENT SPECIFICATION

(11) **EP 0 538 454 B1**
(45) Date of publication and mention of the grant of the patent: **30.07.1997**
(21) Application number: 92912165.5
(22) Date of filing: 08.05.1992
(51) Int. Cl.: G01D 15/06, G03G 15/05, G03G 15/02

(54) **APPARATUS FOR INFORMATION TRANSFER**
DATENÜBERTRAGUNGSVORRICHTUNG
APPAREIL POUR LE TRANSFERT D'INFORMATIONS

(30) Priority: 08.05.1991 US 697166; 27.09.1991 US 766691; 17.01.1992 IL 100694; 14.02.1992 IL 100961
(43) Date of publication of application: 28.04.1993
(60) Divisional application: 96119389.3
(73) Proprietor: CUBITAL AMERICA, INC., Troy, MI 48083 (US)
(72) Inventor: ZUR, Albert, Givat Savion (IL); WEKSLER, Meir, 76 805 Mazkeret Batya (IL); POMERANTZ, Itzchak, Kfar Sava (IL)
(74) Representative: Baillie, Iain Cameron
(86) International application number: US9203870
(87) International publication number: WO9219938

(56) References cited:
- EP-A- 0 327 236
- EP-A- 0 368 316
- US-A- 4 087 826
- US-A- 4 155 093
- US-A- 4 207 100
- US-A- 4 409 604
- US-A- 4 568 955
- US-A- 4 641 955
- US-A- 4 748 464
- US-A- 4 855 768
- US-A- 4 931 876
- US-A- 4 973 994
- PATENT ABSTRACTS OF JAPAN vol. 14, no. 391 (E-968) (4334) 23 August 1990 & JP-A-02 143 778 (VICTOR CO OF JAPAN) 1 June 1990

## Description

### FIELD OF THE INVENTION

The present invention relates to apparatus and methods for non-contact printing, reading and imaging.

### BACKGROUND OF THE INVENTION

There exist in the patent literature disclosures of a great number of techniques for non-contact printing and imaging. The most widely used of these techniques is electrophotography wherein an electrostatic image is optically formed on a photoconductor, which is then developed with a toner. The toner image is transferred to a substrate and fused thereon.

An additional technique in general use is ionography, wherein an electrostatic image is formed on a dielectric substrate by firing charges directly on the substrate using an imagewise ion source.

A technique for the transfer of electrostatic images from a photoconductor dielectric onto a dielectric substrate has also been proposed in Electrophotography by R.M. Schaffert, 2nd Edition, Focal Press, London, 1975 at pages 166 - 176 and in U.S. Patent 3,055,006. This technique, known as TESI (Transfer of Electrostatic Images) employs an imagewise optical signal to create a charge image on a photoconductor. The charge image is subsequently replicated onto a dielectric substrate by applying single polarity charges to a surface of the dielectric substrate opposite from that surface which faces the photoconductor.

According to a first aspect the present invention provides apparatus for information transfer comprising:
a dielectric element having first and second surfaces;
at least one conductor associated with said first surface of the dieletric element, and
a charge source, the apparatus being characterized by:
said at least one conductor being operative for applying information bearing voltages in a time-dependent manner to given locations on a first surface of the dielectric element, thereby causing apparent surface voltages on the second surface of said dielectric element, and
said charge source being an alternating polarity charge source for supplying a flow of non-visible charges of either polarity to the second surface of said dielectric element, wherein said flow is operative to temporarily neutralize the apparent surface voltages on said second surface, leaving on said second surface a charge pattern corresponding to the information bearing voltages applied by said at least one conductor. The arrangement may be such that following the supply of charges in a time-dependent manner to given locations on the second surface the quantity of the charge retained at each given location is related to the voltage applied to said given location at the time of ceasing the supply of charges thereto, whereby the time relationship between the applying of the voltage and the ceasing of the supply of charges provides an imagewise charge pattern on the dielectric element.

Said information bearing voltages may comprise positive and negative levels, and said flow of non-visible charges may be operative to transfer said information between said first and second surfaces creating a dual polarity charge pattern on said second surface. Said information bearing voltages may comprise half-tone information and said flow of charges may be operative to transfer said half-tone information between said first and second surfaces.

Said information bearing voltages may include a continuum of voltage levels, and said flow of non-visible charges may be operative to transfer information between said first and second surfaces creating a charge pattern containing a continuum of charge density levels on said second surface. Said continuum of charge density levels may correspond to optical density levels of toning materials and the different locations on said charge pattern contain different charge densities.

According to a further aspect the invention provides apparatus for information transfer comprising:
a dielectric element
a plurality of individual elements, carrying time-dependent voltage signals representing a pattern, arranged in operative association with a first surface of said dielectric element; and
a charge source capable of providing alternating polarity non-visible charges, operative to apply a flow of charges to a second surface of the dielectric substrate and whereby as a result of application of charges, the second surface retains a charge pattern corresponding to the desired pattern represent by the voltage signals; the apparatus being characterized in that the charge source includes a charge source assembly providing an edge defined charge flow and comprising:
an elongate source of positive and negative charges;
an elongate electrostatic shield disposed about said source of positive and negative charges forming a charge flow having at least one defined edge; and
wherein the two dimensional spatial resolution of said charge pattern is generally determined in one direction by said elongate edge and in a second dimension by said individual elements. In either aspect of the invention referred to above there may be provided a developing device operative to develop the charge pattern to provide a visible image. Further the apparatus may comprise electronic means to provide said voltages in a time-dependent manner. In one embodiment at least one conductor has a configuration corresponding to text, graphics or bar codes. In the apparatus when it includes a developing device there may be transfer apparatus operative to transfer said developed, visible image to a final print substrate, and fusing apparatus operative to fuse said developed, visible image to a final print substrate. In one embodiment there is provided an intermediate transfer member. The electrostatic shield may be a biased conductive shield, preferably held at a ground potential. The charge source may comprise:
at least one elongate conductor coupled to at least one source of AC voltage;
a grounded conductive electrode in electrically insulative relationship with said at least one elongate conductor whereby said grounded electrode is disposed opposite said elongate conductor in a gas environment. The grounded conductive electrode may be in a gridlike shape or elongate slot. In one arrangement the outer surface of said dielectric element is the outer surface of a drum, and in another the dielectric element itself is a dielectric web or belt. A further embodiment includes a dielectric support element wherein said at least one conductor is disposed intermediate the dielectric element and a dielectric support element.

According to yet another aspect of the invention there is provided a method for information transfer employing information transfer apparatus comprising:
a dielectric element having first and second surfaces;
at least one conductor associated with the first surface of the dielectric element, and
a charge source, the method being characterized by:
employing said at least one conductor for applying information bearing voltages in a time-dependent manner to given locations on a first surface of said dielectric element, thereby causing apparent surface voltages on a second surface of said dielectric element, and
supplying a flow of non-visible alternating polarity charges to said second surface of said dielectric element, wherein said flow is operative to temporarily neutralize the apparent surface voltages on said second surface, leaving on the second surface a charge pattern corresponding to the information bearing voltages applied by said at least one conductor. Preferably following the supply of charges in a time-dependent manner to given locations on a second surface the quantity of the charge retained at each given location is related to the voltage applied to said given location at the time of ceasing the supply of charges thereto, whereby the time relationship between the applying of the voltage and the ceasing of the supply of charges provides an imagewise charge pattern on the dielectric element. The voltage supplied to said conductor may comprise a continuum of voltage levels and said charge pattern contain a continuum of charge density levels.

According to yet another aspect of the invention there is provided a method for information transfer employing information transfer apparatus comprising;
a dielectric element
a plurality of individual elements, carrying time-dependent voltage signals representing a pattern, arranged in operative association with a first surface of said dielectric element; and
a charge source including a charge source assembly providing an edge defined charge flow and comprising:
a source of positive and negative charges;
an elongate electrostatic shield disposed about said source of positive and negative charges forming a charge flow having at least one defined edge;
the method being characterized by;
employing said plurality of individual elements for applying time-dependent voltage signals to a first surface of said dielectric element, and
supplying a flow of alternating polarity non-visible charges to a second surface of the dielectric substrate and whereby as a result of application of charges, the second surface retains a charge pattern corresponding to the desired pattern represent by the voltage signals;
wherein the two dimensional spatial resolution of said charge pattern is generally determined in one direction by said elongate edge and in a second direction by said individual element. The method may also comprise the step of toning said charge pattern to provide a developed visible image, and the step of transferring said visible image to a final print substrate.

### BRIEF DESCRIPTION OF THE DRAWINGS

The present invention will be understood and appreciated more fully from the following detailed description, taken in conjunction with the drawings in which:
Figs. 1A, 1B, 1C and 1D are illustrations of the application of voltage or charge on various surfaces over time in accordance with a preferred embodiment of the present invention;
Fig. 2 is an illustration of a time varying voltage signal on a first surface of a dielectric substrate resulting in a corresponding charge pattern on an opposite surface of the dielectric substrate in accordance with a preferred embodiment of the present invention;
Fig. 3 is a pictorial illustration of apparatus for applying voltage and charges to opposite surfaces of a dielectric substrate in accordance with one embodiment of the present invention; Figs. 4A and 4B are respective generalized and side view illustrations of apparatus for applying voltage and charges to opposite surfaces of a dielectric substrate in accordance with another embodiment of the present invention;
Figs. 5A and 5B are respective generalized and detail illustrations of apparatus for applying voltage and charges to opposite surfaces of a dielectric substrate in accordance with yet another embodiment of the present invention;
Figs. 6A and 6B are simplified illustrations of apparatus for printing constructed and operative in accordance with a preferred embodiment of the present invention;
Figs. 7A, 7B and 7C are diagrams of various operational parameters of the apparatus of Fig. 3;
Figs. 8A and 8B simplified illustrations of respective side and facing views of a system for reading and writing electrostatic images in accordance with a preferred embodiment of the present invention;
Figs. 9 - 10 and 11A - 11C are illustrations of the operation and structure of apparatus constructed and operative in accordance with a preferred embodiment of the present invention;
Fig. 12 is a simplified illustration of apparatus for replicating a charge pattern in accordance with a preferred embodiment of the present invention;
Figs. 13A and 13B are illustrations of the operation of the apparatus of Fig. 21;
Figs. 14A and 14B are respectively graphical and pictorial illustrations of the operational parameters of apparatus for continuous toning in accordance with a preferred embodiment of the invention;
Fig. 15 is a schematic illustration of an alternate embodiment of the apparatus of Figs 4A and 4B;
Fig. 16 is an illustration of apparatus for a programmable color projector in accordance with in alternate embodiment of the present invention;
Figs. 17A and 17B are illustrations of alternate embodiments of the apparatus for a programmable projector of Fig. 16 in accordance with the present invention;
Fig. 18A and 18B are illustrations of apparatus for "touching-up" charge images by erasing or adding charges in accordance with a further embodiment of the present invention;
Figs. 19A and 19B are illustrations of the operation of apparatus of Figs. 18 A and 18 B in accordance with the apparatus of Figs. 18 A and 18 B;
Figs. 20 A, 20B and 20C are illustrations of an alternate arrangement of conductive strips in the writing apparatus of Figs. 4A and 4B in accordance with the present invention;
Figs. 21 A and 21B are illustrations of a further embodiment of the writing apparatus of Figs. 4A and 4B; and
Figs. 22 A, 228 and 22C are illustrations of parameters for obtaining a continuum of gray levels by pseudo-half tones in accordance with an embodiment of the present invention.

### DETAILED DESCRIPTION OF A PREFERRED EMBODIMENT

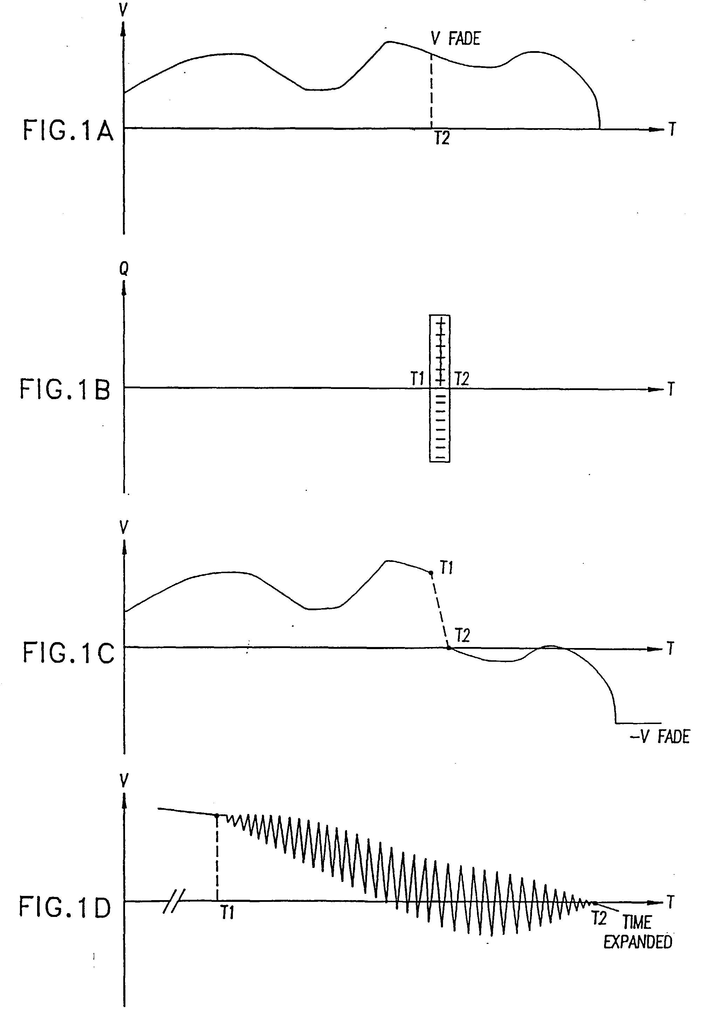

Reference is now made to Figs. 1A - 1D, which illustrate the operation of the present invention. Fig. 1A illustrates an arbitrary voltage at a typical point location on a first surface of a dielectric substrate as it varies over time. The voltage may be applied to the typical point location by means of a conductive backing associated with the first surface of the dielectric substrate in touching or capacitive relationship therewith. The conductive backing may be a separate conduit or in close proximity to, or alternatively a permanent coating or layer formed on, the first surface of the dielectric substrate.

Fig. 1B illustrates, on the same time scale as in Fig. 1A, the application of a flow of charges to a second surface of the dielectric substrate, which is opposite to and generally uniformly spaced from the first surface, to temporarily neutralize the effect on the second surface of the voltage applied to the first surface. Following application of such charges the second surface retains a charge corresponding to the voltage which was applied to the first surface, at the time T2 that the application of such charges ceased, but of an opposite polarity thereto.

According to a preferred embodiment of the invention, the flow of charges comprises an alternating polarity charge flow to a second surface of the dielectric substrate which is opposite to and generally uniformly spaced from the first surface. It is preferred that the time variation of the voltage applied to any given location on the first surface be sufficiently small such that at least during an end portion of the duration of the alternating polarity charge flow at such location, the voltage variation is essentially zero.

The alternating polarity charge flow at each location is represented in Fig. 1B by a stack of positive and negative charges. The beginning and end of the duration of the application of the alternating polarity charge flow at each location are indicated in Fig. 1B respectively as T1 and T2.

Fig. 1C illustrates the voltage on the second surface of the dielectric substrate. It is noted that this voltage tracks the voltage on the first surface until the charge flow begins at time T1. Upon termination of the charge flow at time T2, the voltage of the second surface is very nearly zero. Thereafter if the voltage on the first surface is brought to zero, the voltage on the second surface becomes approximately the negative of the voltage on the first surface at time T2, due to charge accumulation on the second surface.

Fig. 1D is an expanded time scale illustration corresponding to Fig. 1C and illustrating with greater particularity one possible application of an alternating charge flow to the second surface, which results in a reduction in the voltage on the second surface from the voltage at T1 to very nearly zero at T2.

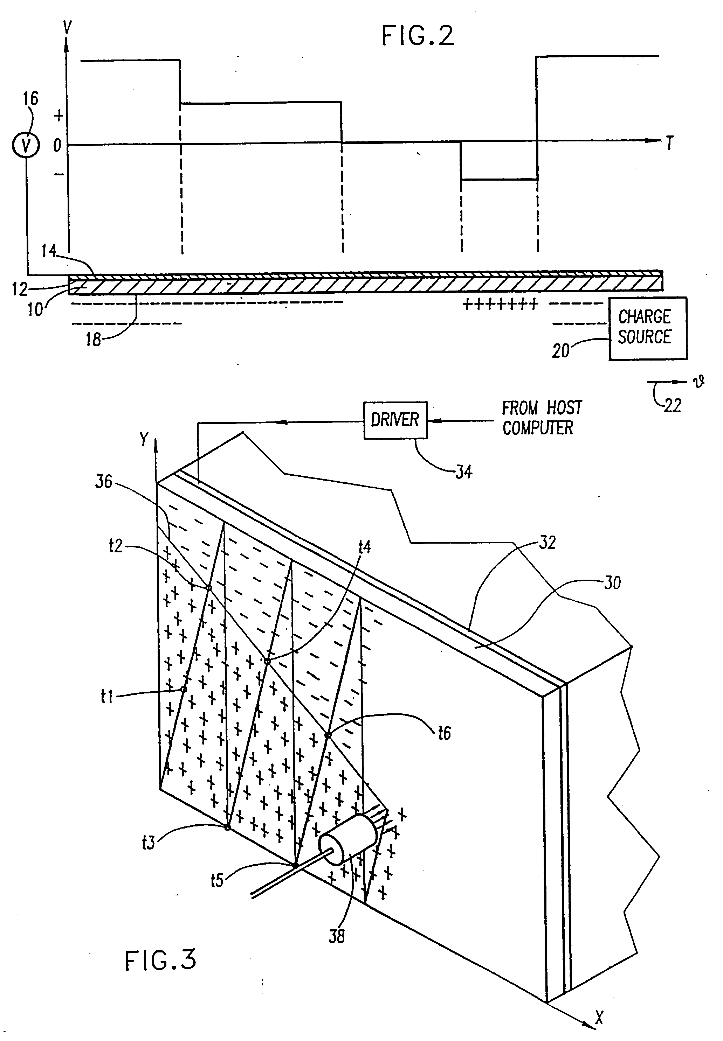

Referring now to Fig. 2, there is shown schematically an arbitrary voltage signal provided on a dielectric substrate 10 at a first surface 12 thereof, which is preferably backed with a conductive backing 14 to which is coupled a time-variablevoltagesource 16. Fig. 2 also illustrates in one dimension, the corresponding spatial charge pattern, of opposite polarity to the corresponding voltage signal, which is produced on a second surface 18 of the dielectric substrate in accordance with the present invention, by application of a flow of charges to the second surface which is operative to temporarily neutralize the effect on the second surface of the voltage applied to the first surface 12. The application of the flow of charges is preferably provided by an alternating polarity charge source (APCS) 20, such as an AC corona, capable of achieving a spatial edge accuracy consistent with the desired resolution. Such an AC corona may be realized by employing one or more corona wires or needles enclosed within a shield having a defined charge outlet opening and by amplitude modulation of the AC voltage supplied to the corona wire or wires.

The charge source 20 is preferably moved at a velocity v along the second surface 18 of the dielectric substrate 10, indicated by an arrow 22.

Reference is now made to Fig. 3 which is a pictorial illustration of apparatus for applying voltage and charges to opposite surfaces of a dielectric substrate 30 in accordance with one embodiment of the present invention. In this embodiment, a conductive plate 32 may be disposed adjacent a first surface of the dielectric substrate 30 and may receive a time-varying voltage from a voltage driver 34, which may be controlled by a host computer.

In the illustrated embodiment, it is desired to produce or write on a second surface a charge pattern which is uniformly negative above a diagonal line 36 and is uniformly positive below the diagonal line. It is appreciated that any suitable charge pattern may be produced using the apparatus and technique illustrated in Fig. 3 and described herein.

A charge source 38, such as that described above, which produces charges which vary in polarity as a function of time, scans the second surface of the dielectric substrate 30 along an arbitrary pattern, such as the up/down and sideways pattern illustrated in Fig. 3.

As described above, in accordance with a preferred embodiment of the invention, as the charge source 38 moves out of charge supply engagement with a given location on the second surface of the substrate 30, at a given time, the residual charge at such location corresponds to the negative of the voltage on the first surface at such time. Thus, it may be appreciated, the modulation of the voltage on conductive plate 32, coordinated with the two dimensional position of the charge source 38 on the second surface enables charge writing on the second surface by modulation of the voltage applied to the first surface, whereby the modulated voltage has information content.

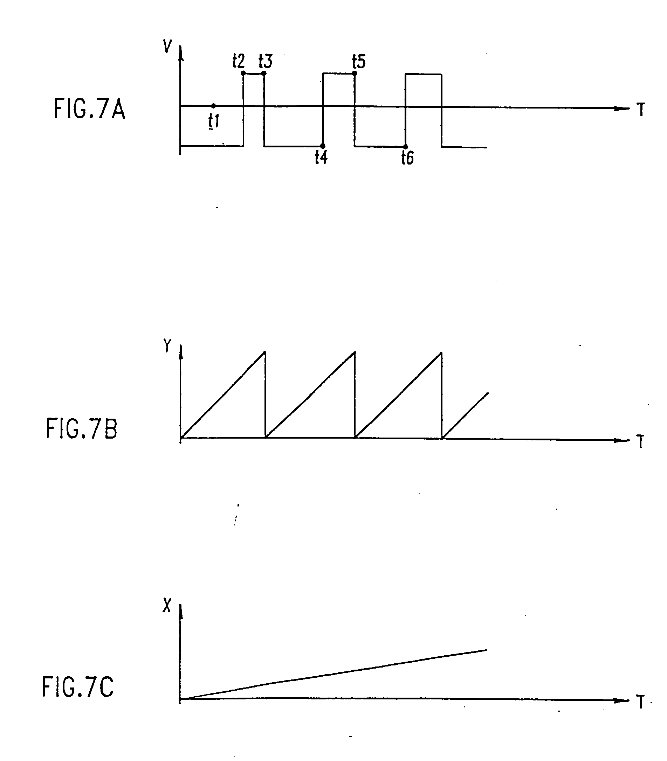

The operation of the apparatus of Fig. 3 may be appreciated and understood better by means of reference to Figs. 7A - 7C. Fig. 7A - 7C, which all lie along the same time scale, illustrate operational parameters of the operation of the apparatus of Fig. 3. Fig. 7A, illustrates the voltage applied to the conductive backing layer 32 and thus to the first surface of the dielectric substrate as a function of time. The indications t1 - t6 illustrate the position of the charge source 38 at various times.

Figs. 7B and 7C illustrate the Y and X positions of the charge source 38 as a function of time.

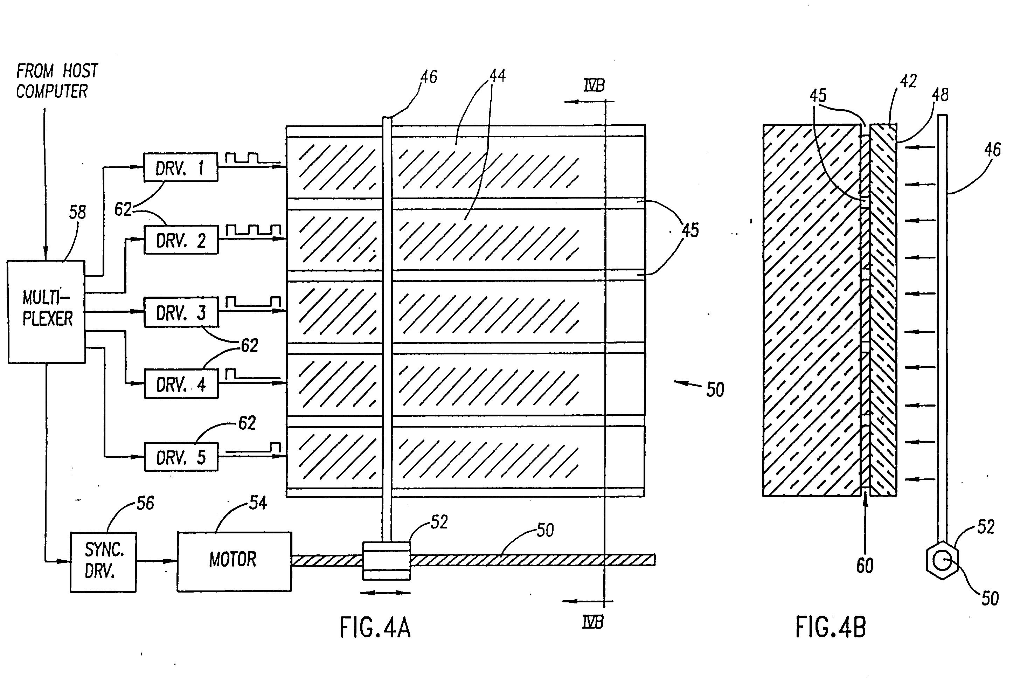

Reference is now made to Figs. 4A and 4B which illustrate apparatus for applying voltage and charges to opposite surfaces of a dielectric substrate 42 in accordance with another embodiment of the present intention. In this embodiment, an elongate alternating polarity charge source (EAPCS) 46, such as that described above and being capable of achieving a spatial edge accuracy consistent with the desired resolution, but employing elongate wires instead of needles, is scanned in one dimension perpendicular to its longitudinal axis, along the second surface 48 of substrate 42, by means of a linear drive mechanism including a worm screw 50 cooperating with a screw rider 52, fixed to source 46. An electric motor 54 drives the worm screw 50 in response to the outputs of a commercially available synchronized driver 56. A host computer (not shown) provides positioning instructions via a multiplexer 58 to driver 56.

In this embodiment, a multisectional conductive backing layer 60, typically comprising a plurality of elongate strips 44, is associated with the first surface of the dielectric substrate 42. Each strip 44 is provided with an information content modulated time varying voltage via a corresponding driver 62, in response to control signals received from the host computer via multiplexer 58.

It may be appreciated that in the embodiment of Figs. 4A and 4B a charge pattern is written on the second surface by information content modulation of voltages applied simultaneously to the different regions of the first surface of the dielectric substrate 42 via strips 44 in synchronism with the one dimensional scanning motion of source 46.

It will be appreciated that in principle due to the parallel voltage "writing", the apparatus of Figs. 4A and 4B has an intrinsically greater writing speed than the apparatus of Fig. 3.

It is appreciated that a desired two-dimensional spatial resolution may be achieved by adjusting appropriate parameters. In a first dimension, the parameters to be adjusted include the width of the elongate strips 44, the.width of a gap 45 between adjacent strips 44 and the thickness of the dielectric layed 42. In a second dimension, the parameters include the edge definition of the EAPCS 46.

It is further appreciated. that the write techniques described hereinabove allow an uninterrupted line of uniform width as small as one pixel to be achieved. The advantages of these techniques include the replacement of dot pixels thus eliminating holes between pixels. Accordingly, intentional overlap of pixels is not necessary.

Multi-sectional conductive backing layer 60 may comprise a uniform conductive film from which a plurality of strips are created using an etching technique such as laser etching, chemical etching, or ion etching. Alternately the multi-sectional conductive backing layer may comprise a grid comprising a weave of straight conductive wires in one dimension and insulating curved wires in a second dimension. This type of grid is available from Carbotex of Grutlistrasse 68, Zurich, Switzerland.

Drivers 56 may be implemented by using standard microelectronics and hybrids which may be connected to the conductive strips by standard microscopic bonding techniques.

Reference is now made to Figs: 5A and 5B which are respective generalized and detail illustrations of apparatus for applying voltage and charges to opposite surfaces of a dielectric substrate in accordance with yet another embodiment of the present invention. Here strips 44 in the embodiment of Figs. 4A and 4B are replaced by a two dimensional array of pixel sized conductive pads 70 which define a two-dimensionally addressable array 73 disposed adjacent the first surface of a dielectric substrate 72. In this case, the alternating polarity charge source need not scan the second surface but instead may uniformly deposit charges thereover.

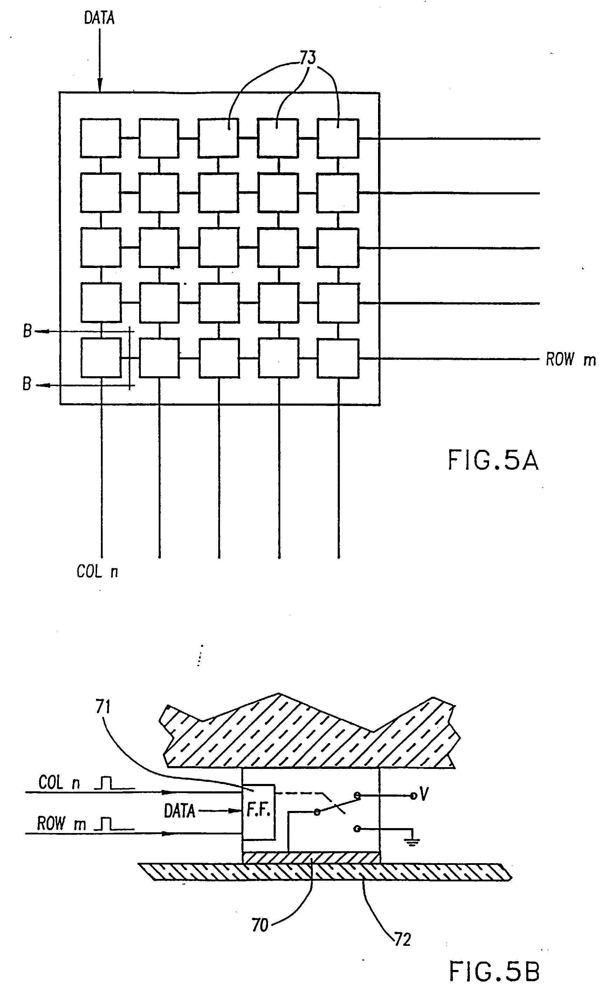

It may be appreciated that in the embodiment of Figs. 5A and 5B a charge pattern is written on the second surface by information content modulation of voltages applied simultaneously to the different regions of the first surface of the dielectric substrate 72 via individual pads 70. In this case, a scanning alternating polarity charge source having precisely defined edge resolution need not be provided and may be replaced by static apparatus for supplying a uniform flow of alternating polarity charges over the entire array 73.

Fig. 5B illustrates a schematic arrangement for addressing a given pad 70, corresponding to a given area element or pixel on the dielectric surface, with either a given voltage or ground.

When a pixel (m,n) is addressed using matrix addressing techniques, the common input data is stored by a data flip-flop 71 associated with pixel (m,n), determining when voltage V is provided to the conductive backing on the dielectric substrate 72 at the corresponding location.

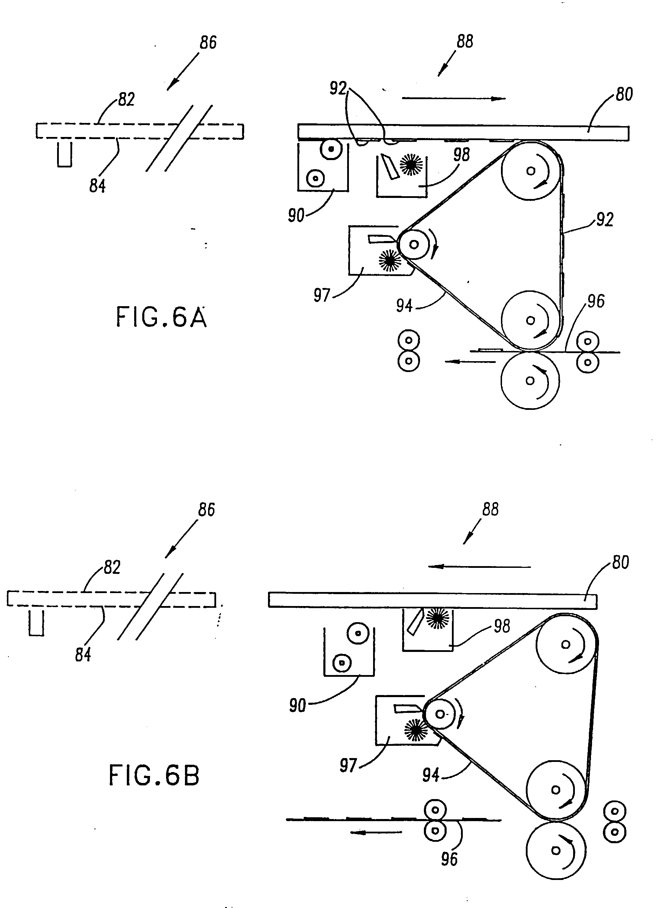

Reference is now made to Figs. 6A and 6B which illustrate an imaging system constructed and operative in accordance with a preferred embodiment of the present invention and comprising a dielectric substrate 80 having a first surface 82 and a second surface 84. The dielectric substrate 80 may be self-supporting or alternatively supported on a suitable support, such as a plate of glass.

The imaging system includes a charge patterning station 86 and a toner application and printing station 88. In this embodiment, the dielectric substrate 80 is reused and moves repeatedly between the stations 86 and 88. The charge patterning station 86 preferably comprises apparatus of the general type described in connection with the embodiment of Figs. 4A and 4B, while the toner application and printing station 88 may be any conventional toner application and printing device.

It is appreciated that a printing and imaging system may equally be operative using a charge patterning station according to any embodiment of the invention, including, without limitation, those illustrated in Figs. 3 - 5B.

For example, station 88 may comprise conventional toner application apparatus 90 for applying toner to a charged surface of a dielectric, thereby providing a toner image on the second surface, as indicated by reference number 92 and an intermediate transfer member 94 for transferring the toner image 92 onto a final substrate 96, such as paper, onto which the toner image is fused by conventional techniques. A cleaning unit 97 cleans the intermediate transfer member 94 following transfer.

Fig. 6A illustrates the stage of toner application and transfer to the final substrate, while Fig. 6B illustrates cleaning of the dielectric substrate 80 by a conventional cleaning unit 98.

The unique feature of the apparatus of Figs. 6A and 6B lies in the fact that unit 86 comprises apparatus in which a charge source along the second surface of the dielectric substrate 80 temporarily neutralizes the effect on the second surface of the voltage applied to the first surface, whereby following application of such charges, the second surface retains a charge corresponding to the voltage applied to the first surface at the time that the application of charge at each given location was discontinued.

It is appreciated that imaging and printing systems may be provided wherein the intermediate transfer member may be eliminated and thus the dielectric substrate 80 on which the charge image is initially formed is the final substrate to which the toner image is eventually fused. As a further alternative, transfer of the toner image on the dielectric substrate 80 directly to a final substrate may be provided.

The foregoing apparatus and techniques may be employed inter alia for mask generation in three-dimensional modeling systems such as those described in assignee's U.S. Patent 4,961,154 and U.S. Patent Application 07/248,318:

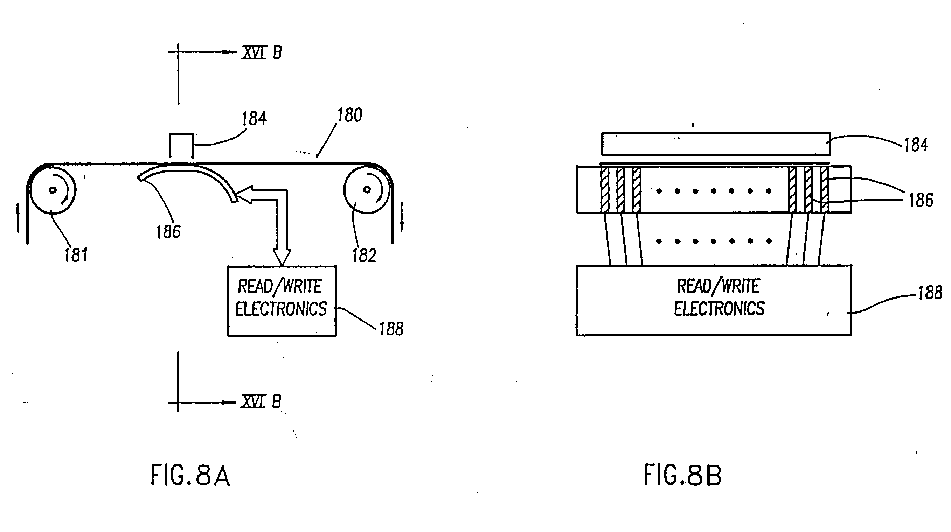

Reference is now made to Figs. 8A and 8B which illustrate respective side and facing views of a system for reading and writing electrostatic images in accordance with a preferred embodiment of the present invention. The system comprises a dielectric substrate 180 which is displaced by rotating drums 181 and 182. and an EAPCS 184 associated with a plurality of parallel conductive strips 186 which function as a conductive backing for the portion of the dielectric substrate disposed intermediate EAPCS 184 and strips 186 at any given time.

Preferably the strips 186 have a slightly curved configuration as shown. Alternately, the strips may be of any suitable configuration.

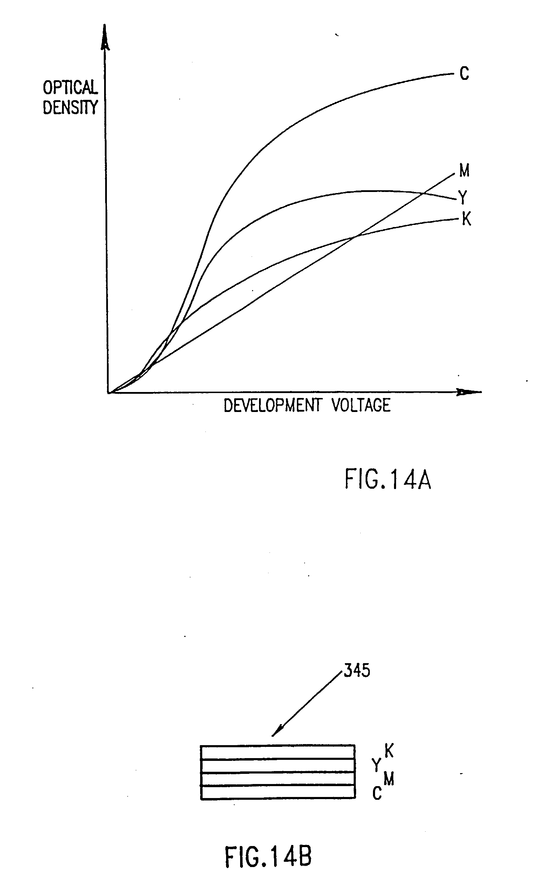

A charge or voltage signal present on dielectric substrate 180 may be read using the techniques described hereinabove, particularly those described in conjunction with Figs. 14A and 14B, by read/write electronics 188 from that portion of the dielectric substrate that is disposed intermediate the strips 186 and the EAPCS 184.

A charge pattern may also be written onto the dielectric substrate 180 using the apparatus of Figs. 8A and 8B in accordance with the techniques described hereinabove, particularly those described in conjunction with Figs. 4A and 4B. According to a further embodiment of the present invention, the configuration of the read/write operations may be according to the apparatus of Fig. 3.

It is appreciated that the apparatus of Figs. 8A and 8B can be used as a write-only system. Alternately, the apparatus of Figs. 8A and 8B may be used as a read-only system.

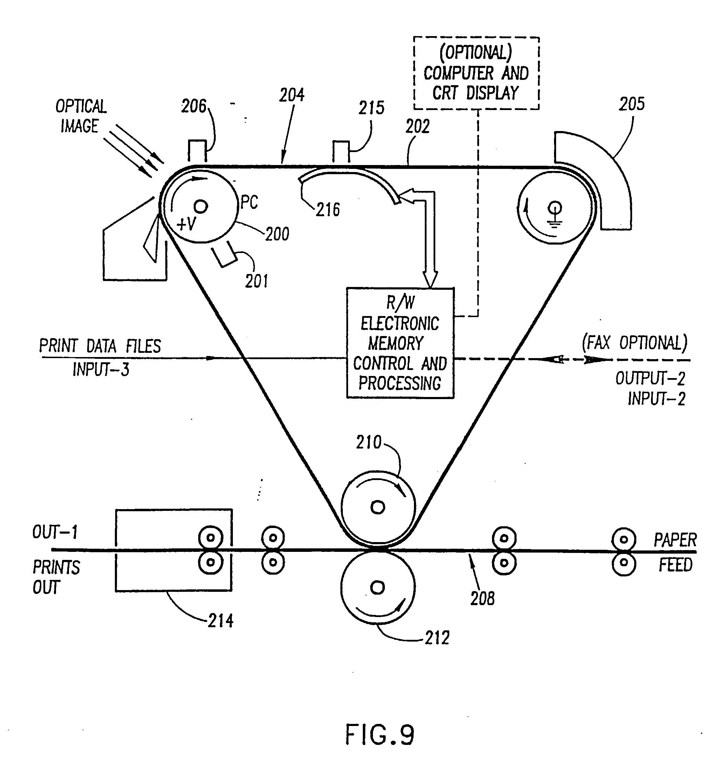

Reference is now made to Figs. 9, 10 and 11 which illustrate the operation and structure of a universal read/rite system Constructed and operative in accordance with a preferred embodiment of the present invention.

The illustrated embodiment employs a web of dielectric material, it being appreciated that any other suitable configuration of the dielectric material, such as, for example, a drum configuration, may be employed alternatively. The dielectric material may also have the properties of a photoconductor in certain operative configurations and under certain operative conditions.

An optical image is exposed onto a photoconductor 200 which is precharged, preferably by an AC corona 201. As a result of the exposure, exposed areas of the photoconductor 200 are selectively discharged thus creating on the photoconductor 200 an electrostatic image corresponding to the optical image. Preferably the exposure takes place across a transparent dielectric web 202. Alternately, the exposure may be performed directly onto the photoconductor 200.

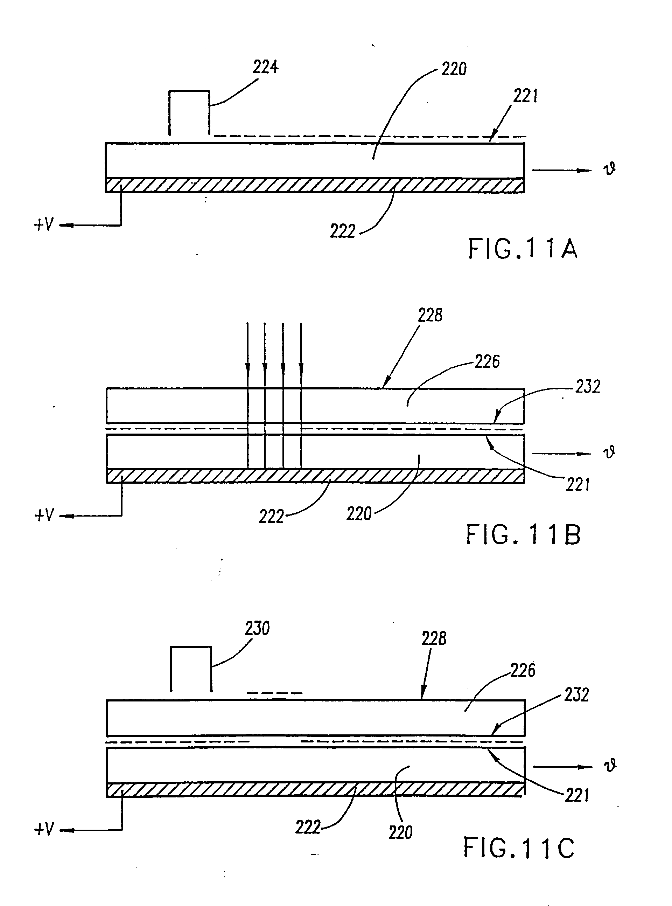

Using the techniques described hereinbelow in conjunction with Figs. 11A - 11C, the electrostatic image on the photoconductor 200 is replicated on an outer surface 204 of the dielectric substrate 202. using an AC corona 206 in accordance with a preferred embodiment of the present invention.

The replicated electrostatic image on surface 204 can be developed using standard development equipment 205 to create a toner image on surface 204. This arrangement offers the advantage of development directly on a dielectric substrate. Subsequently, the toner image can be transferred from surface 204 of dielectric- substrate 202 and fused onto paper 208 or onto any other suitable substrate using standard toner transfer techniques, transfer rollers 210 and 212 and fusing unit 214.

Alternately or additionally, the replicated electrostatic image can be read from the dielectric substrate 202 and converted to a digital image using an APCS 215 and a conductive backing 216 in accordance with the techniques described hereinabove in connection with Figs. 8 A and 8 B. The digital image can be readily stored, processed, scaled or subjected to any manipulations that are typically carried out on digital images.

Furthermore the digital image may be processed or displayed by any external device, typically including a CRT. Following processing, the digital image can be written as an electrostatic image on the dielectric substrate 202 using APCS 215 and conductive backing 216 in conjunction with the write techniques described in Figs. 8A - 8B and may then be developed and output in the same fashion as described above.

It is appreciated that where the dielectric substrate 202 is a photoconductor, replication of the image thereon from another photoconductor, such as photoconductor 200, may be obviated.

Additionally in accordance with an embodiment of the invention, digital data, such as image data, may be input to the system directly, typically from a facsimile machine, printer or plotter or from any suitable data files and can be output or processed according to the techniques described herein. Furthermore, outputs from the system can be sent directly to a facsimile machine, obviating the step of printing the toner image on paper.

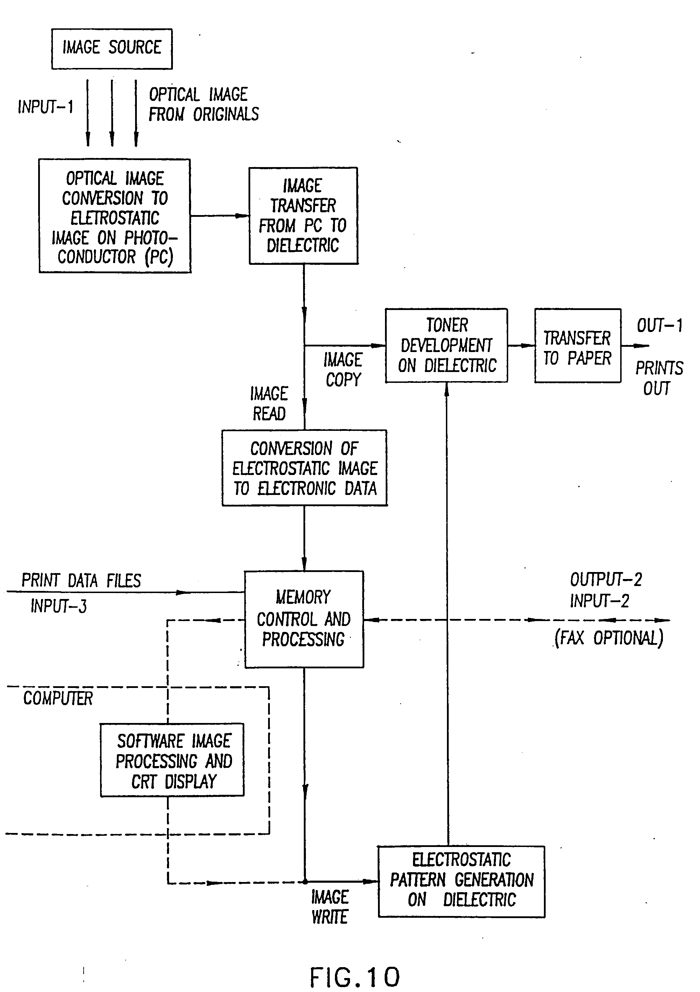

It is appreciated that when a replicated image is read using APCS 215 and conductive backing 216, that image is effectively erased from the surface 204 of dielectric substrate 202 Fig. 10 summarizes the operation of the apparatus of Fig. 9.

particular reference is now made to Figures 11A - 11C which further illustrate the operation of the embodiment illustrated in Figs.9 and 10.

Figure 11A illustrates a photoconductor 220, which may serve as photoconductor 200 in the embodiment of Fig. 9, and an associated conductive backing 222 which is biased to an appropriate voltage +V.

An AC corona 224, which may serve as corona 201 in the embodiment of Fig. 9 , creates a uniform charge distribution on surface 221 of the photoconductor 220 using writing techniques described hereinabove in association with Fig. 3. The charge distribution negatively corresponds to the uniform bias voltage present at the conductive backing 222.

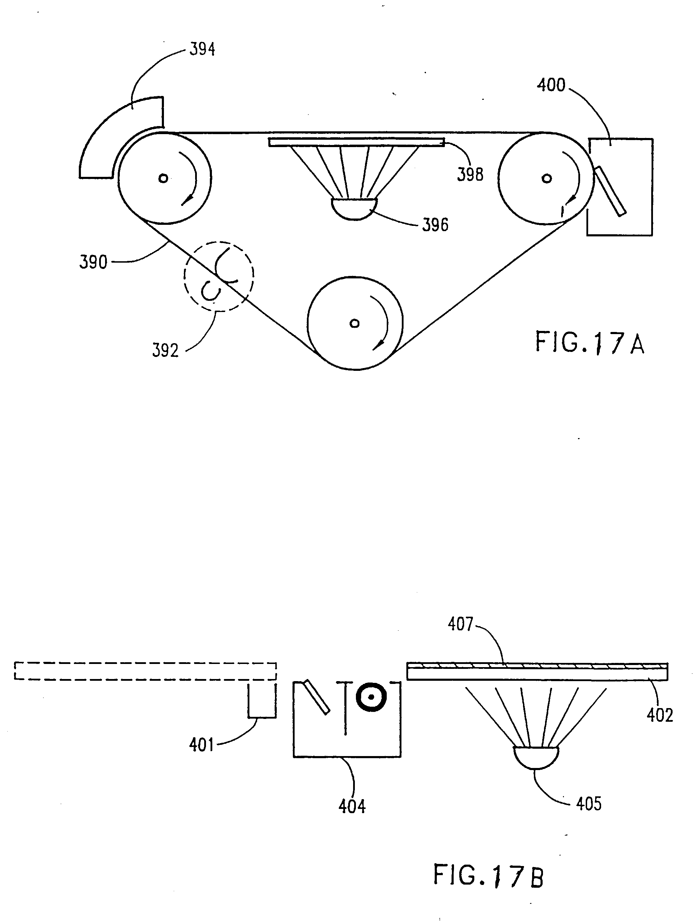

Fig. 11B illustrates the optical exposure of an image onto the charged surface 221 of photoconductor 220 across a transparent dielectric substrate 226 which may serve as substrate 202 in the embodiment of Fig. 17. Exposed-areas of the uniform charge distribution present on surface 221 are selectively discharged, thereby creating a charge pattern corresponding to the image.

Fig. 11C illustrates the negative replication onto surface 228 of the dielectric substrate 226 of the charge pattern on surface 221 using an AC corona 230, which may serve as AC corona 206 of figure 9. The replication is carried out using a variation of the writing technique described hereinabove in conjunction with Fig 2. wherein the imagewise charged photoconductor 220 and its associated backing 222 replace the conductive backing 14 in the embodiment of Fig. 2.

According to this technique, the voltage at the conductive backing 14 of the embodiment of Fig. 2 is replaced by the combined effective potential of the charge pattern on surface 221 and of the conductive backing 222 having a bias voltage of +V. In those regions that were not discharged by the optical exposure no charges are deposited on the surface 228 since the net potential on surface 232 of the dielectric substrate 226 is effectively zero in those regions.

Accordingly, in those regions that were discharged by the optical exposure, charges are deposited on surface 228, since the net potential on surface 232 of the dielectric substrate 226 equals the bias voltage +V of the conductive backing 222, with allowance being made for residual charges remaining on the photoconductor following the exposure.

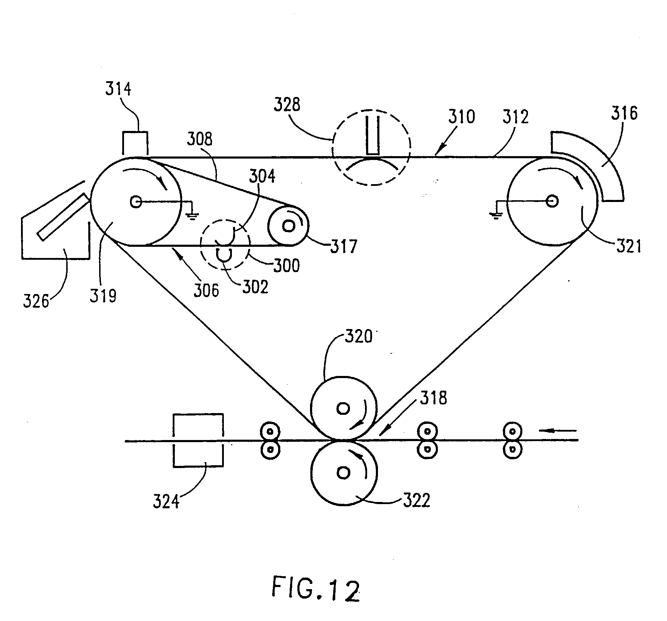

Reference is now made to Fig. 12 which illustrates apparatus for replicating a charge pattern in accordance, with a preferred embodiment' of the present invention.

Information defining a computerized image is input from computer (NOT SHOWN) to a writing system 30 which comprises an elongate alternating polarity charge source 302 and conductive strips 304. Writing system 30 typically corresponds to apparatus 184 and 186 of Figs. 8 A and 8 B.

A charge pattern representing the computerized image is written onto an outer surface 306 of a substrate 308 using the techniques described hereinabove particularly those described in conjunction with Figs. 8A and 8B. Typically, substrate 308 is a dielectric substrate.

Alternately, any other suitable technique may be used to generate a charged pattern on surface 306 of substrate 308.

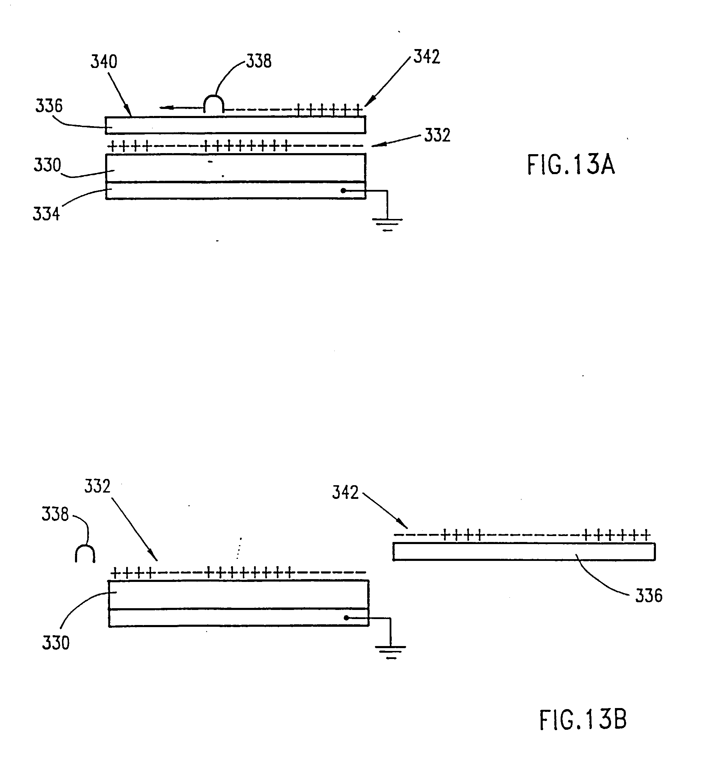

Using the techniques described hereinbelow in conjunction with Figs 13A and 13B, the charge image on substrate 308 is replicated on an outer surface 310 of substrate 312 using a single pass of an AC corona 314 in accordance with a preferred embodiment of the present invention. Typically, substrate 312 is a dielectric substrate. It is appreciated that a copying function is provided by these steps.

It is further appreciated that in accordance with the present invention, electrostatic pre-conditioning of substrate 312 is not necessary prior to carrying out the replication.

Replicated electrostatic image on surface 310 may be developed using standard development equipment 316 backed by a drum 321 creating a toner image on surface 310.

Preferably, charge pattern on surface 306 remains intact subsequent to the replication process allowing it to serve as a master for numerous hard copies. Typically, numerous replications can be made from one charge image on surface 306.

It is appreciated that while drums 319 and 317 allow substrate 308 to rotate with the motion of substrate 312, writing system 300 need only be operative during the generation of the master.

Subsequent to copying, the toner image can be transferred from surface 310 of substrate 312 and fused onto paper 318 or any other suitable media using standard toner transfer techniques, transfer rollers 320 and 322 and a fixing unit 324. Cleaning unit 326 is operational to remove residual toner from surface 310 of substrate 312.

In accordance with a further embodiment of the present invention, a retouch system 328 which functions in accordance with the techniques described herein. Retouch system 328 may be operational to enable alterations from copy to copy. For example, numbering each copy with a different number could be carried out using such a retouch system.

Particular reference is now made to Figs. 13A and 13B which further illustrate the replication operation of the embodiment illustrated in Fig. 12.

The replication is carried out using a variation of the writing technique described hereinabove in conjunction with Fig. 2, wherein an imagewise charged substrate 330 and its associated backing 334 replace the conductive backing 14 in the embodiment of Fig. 2.

According to this technique, the voltage at the conductive backing 14 of the embodiment of Fig. 2 is replaced by the combined effective potential of the charge pattern at substrate 330 and grounded layer 334.

Fig. 13A illustrates a substrate 330 bearing a charge pattern 332. Typically, substrate 330 is a dielectric substrate of the type described hereinabove and may serve as substrate 308 in the embodiment of Fig. 12. Associated with dielectric substrate 330 is a conductive backing 334 which is grounded. A second substrate 336, typically a dielectric substrate of the type described hereinabove, is placed in close proximity to dielectric substrate 330. Associated with substrate 336 is an AC corona 338 which is typically. of the type described hereinabove, particularly in conjunction with Figs. 11A and 11C.

As AC corona 338 sweeps over an upper surface 340 of second substrate 336, a charge pattern 342 is generated on upper surface 340 in accordance with a variation of the writing techniques of the present invention particularly those techniques described in association with Figs. 2 - 5. Resulting charge pattern 342 is the inverse of charge pattern 332 present on dielectric substrate 330.

It is appreciated that in the configuration of Fig. 12, the apparent surface voltage backing for the second substrate is provided by the charge pattern on the first dielectric substrate and grounded drum 319.

Fig. 13B illustrates substrate 330 and second substrate 336 after the sweep by AC corona 338. Subsequent to the sweep, second substrate 336, bearing a charge pattern 342 which comprises the inverse of charge pattern 332 on substrate 330, is moved out of prximity of substrate 330. Inverse charge pattern 342 may then be toned and the toned image may then be transferred to another media. During toning, the substrate bearing the image to be toned is backed by a ground potential.

It is appreciated that in the configuration of Fig. 12, drum 321 may provide the ground potential during toning.

It is further appreciated that subsequent to copying, substrate 330 retains the charge pattern 332 that was present before the sweep of corona 338.

Reference is now made to Figs. 14A and 14B which illustrate operational parameters for continuous toning apparatus in accordance with a preferred embodiment of the present invention.

It is appreciated that certain toners are characterized by the property that the optical density of a toned area can be controlled by the development voltage. Some liquid toners and certain dry toners are examples of this type of toner.

It is also appreciated that the write techniques described hereinabove are capable of writing continuous voltage levels thus enabling the generation of one-pass monochrome toned images of continuous optical densities, when toners of the type described hereinabove are used.

In accordance with a preferred embodiment of the present invention, continuous color printing using standard subtractive colors can be achieved in accordance with the write techniques described herein and standard multi-pass printing techniques.

Fig. 14A graphically demonstrates hypothetical optical densities of four basic printing colors (CMYK) typically used with subtractive color printing systems as a function of the development voltage of each of the toner colors.

Fig. 14B illustrates a single area of a color print 345 to which four basic printing colors (CMYK) have been sequentially transferred in accordance with standard multi-pass printing techniques.

The specific optical density of each color across any area may be controlled by writing (in accordance with the writing techniques described hereinabove in association with Figs. 3 - Fig. 5) at the corresponding area a voltage level which corresponds to the desired optical density for that color.

It is appreciated that the subtractive combination of the optical densities of each of the four basic printing colors over an area results in a color having any of a continuum of color shades.

It is also appreciated that a color shade may be uniformly distributed within the borders of an entire area. Therefore, the specific color shade desired is achieved at the level of one pixel and not as a result of the combination of several pixels.

It is further appreciated that this embodiment offers continuous control over color levels providing high quality color prints.

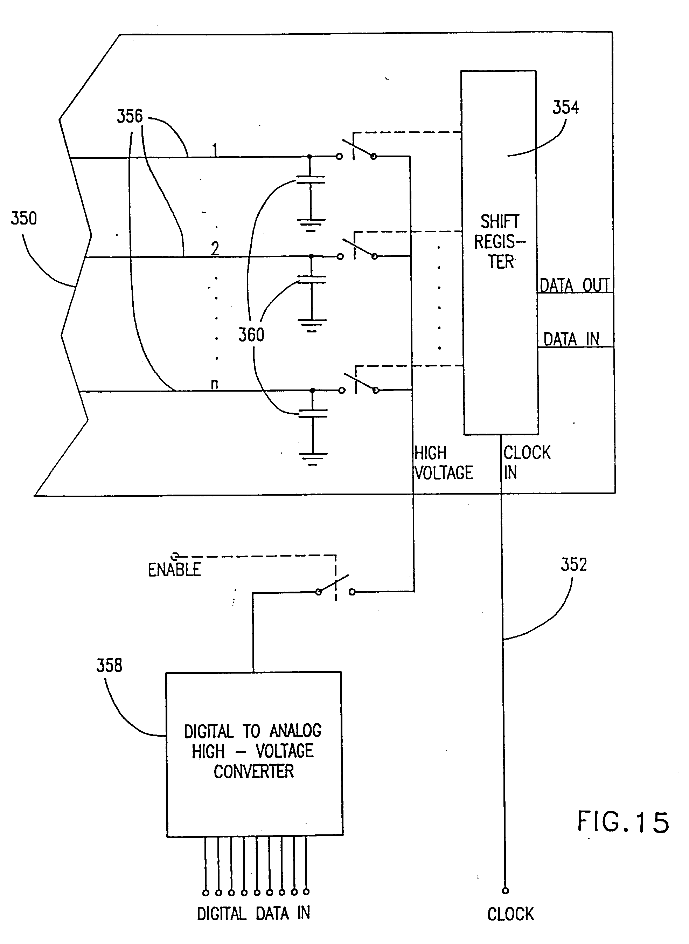

Reference is now made to Fig. 15 which illustrates a schematic representation of an alternate embodiment of the apparatus of Figs 4A and 4B.

System 350 is a alternate embodiment of an apparatus for writing continuous as well as half-tone levels.

A clock 352 is pulsed in coordination with input data causing a shift register 354 to sequentially address each of a plurality of conductive strip 356. The conductive strips 356 may correspond to conductive strips 44 in Fig. 4A. The strip addressed at any given time receives a voltage level from a source of outside electronics 358 and is charged to that voltage level. Typically, outside electronics 358 comprises a digital to analog high voltage converter.

Associated with each strip 356 is a capacitor 360 which retains the given voltage level until the strip is subsequently addressed whereby the strip 356 receives a new voltage level.

It is appreciated that the write techniques of the present invention allow charges of either polarity to be written to the substrate. It is further appreciated that one individual charge pattern can contain charges of both polarities.

It is appreciated that the number of voltage levels achievable in accordance with this embodiment is not dependent on the print head. Instead, the number of voltage levels is determined by outside electronics.

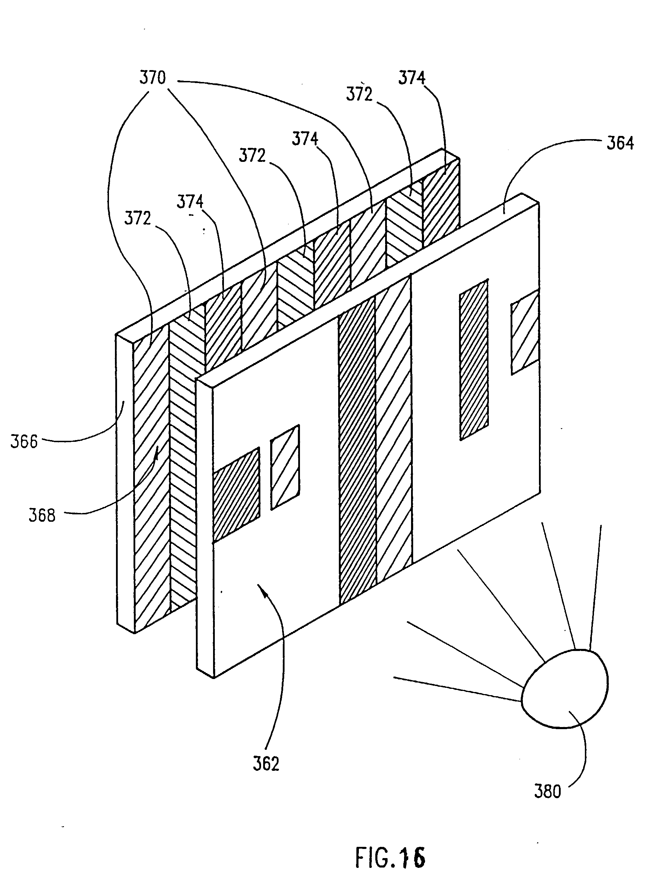

Reference is now made Fig. 16 which illustrates apparatus for a programmable color projector which produces color transparencies from continuous monochrome images, created in one pass.

A continuous monochrome toned image 362 is created on a substrate 364 in accordance with writing techniques described hereinabove and in accordance with standard toning techniques. Typically, substrate 364 is transparent. Associated with substrate 364 is a color filter 366 typically configured with a plurality of adjacent parallel color strips 368. Typically, toned image 362 is registered with respect to color filter 366.

Color strips 368 are typically sequentially arranged in groups comprising a red strip 370, a green strip 372 and a blue strip 374. Typically, the color strips are aligned normally to the transparent conductive strips (NOT SHOWN) which comprise the backing for substrate 364.

In accordance with a preferred embodiment of the present invention, the toned image 362 comprises areas that have been continuously toned to a desired gray level. The stoned image 362 serves as a neutral density filter for areas of color filter 366.

It is appreciated that color filter 366 may be attached to a surface of substrate 364. Alternately, color filter 366 may be separate.

Color projections are created when a white light source 380 projects light through the toned image 362 and the color filter 366.

Reference is now made to Figs. 17A and 17B which illustrate alternate embodiments of the apparatus for a programmable projector of Fig. 16 in accordance with the present invention.

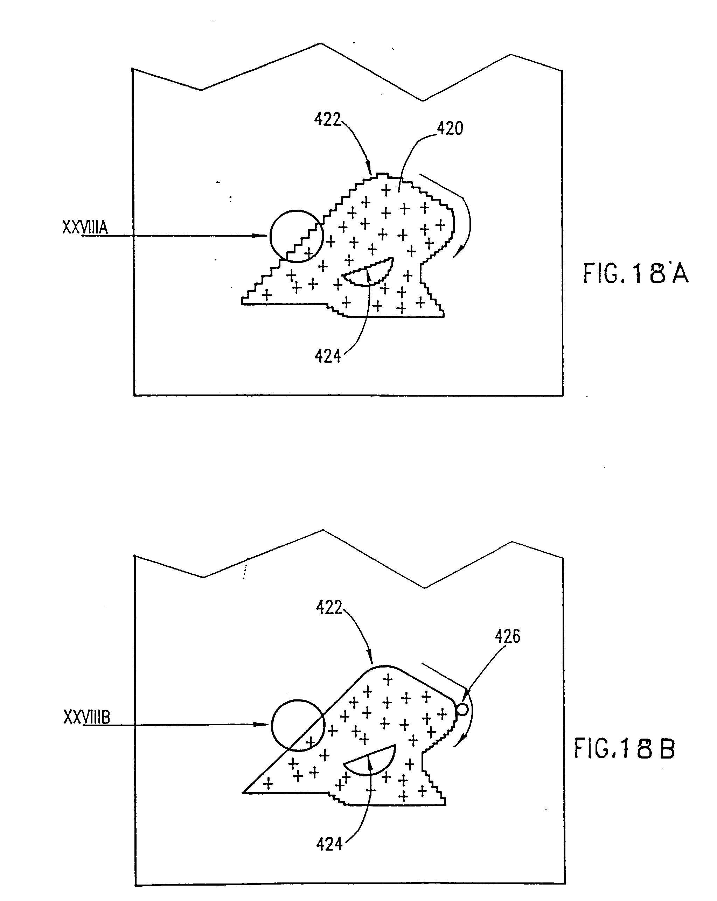

Fig: 17A represents a belt configuration of the present invention. Charge images are written onto a substrate 390 using a writing system 392 which may correspond to writing system 300 of Fig. 12. The charge images are toned by a standard toning unit 394, Light source 396 projects light through color filter 398 where color filter 398 comprises a color filter of the type described hereinabove, particularly in association with Fig. 18. A standard cleaning unit 400 is operative to clean toner from substrate 390 subsequent to projection.

Fig. 17B presents a plate configuration of the same apparatus. A charge-pattern is written on a substrate 402 by writing system 401 in accordance with the write techniques described hereinabove, particularly in association with Fig. 4. Substrate 402 is operative to move into association with writing system 401 and into association with a toning and cleaning unit 404. Toning and cleaning unit 404 is operative to tone charge patterns on substrate 402 and to clean toner from substrate 402. Subsequent to toning of substrate 402, a light source 405 projects light through a color filter 407 (which may be of the type described hereinabove in conjunction with Fig. 25) and through substrate 402 bearing a toned image thus generating a color projection (NOT SHOWN).

Reference is now made to Figs. 18A - 18B which illustrate apparatus for "touching-up" charge images by erasing or adding charges in accordance with the present invention.

Fig. 18 A illustrates a charge pattern 420 that was created in accordance with the write techniques of the present invention particularly in association with Figs. 4A and 4B. In accordance with an embodiment of the present invention, the writing resolution was fairly low resulting in a "ragged" effect on an outer edge 422 and an inner edge 424.

It is appreciated that due to the benefits of the writing technique described hereinabove, the fairly low writing resolution does not adversely affect the charge coverage over the inner portions of the image. Instead, the effects of the low resolution are primarily evident along the edges. This allows images to be written at a deliberately determined lower resolution and then "touched-up" to simulate the actual higher resolution that is desired.

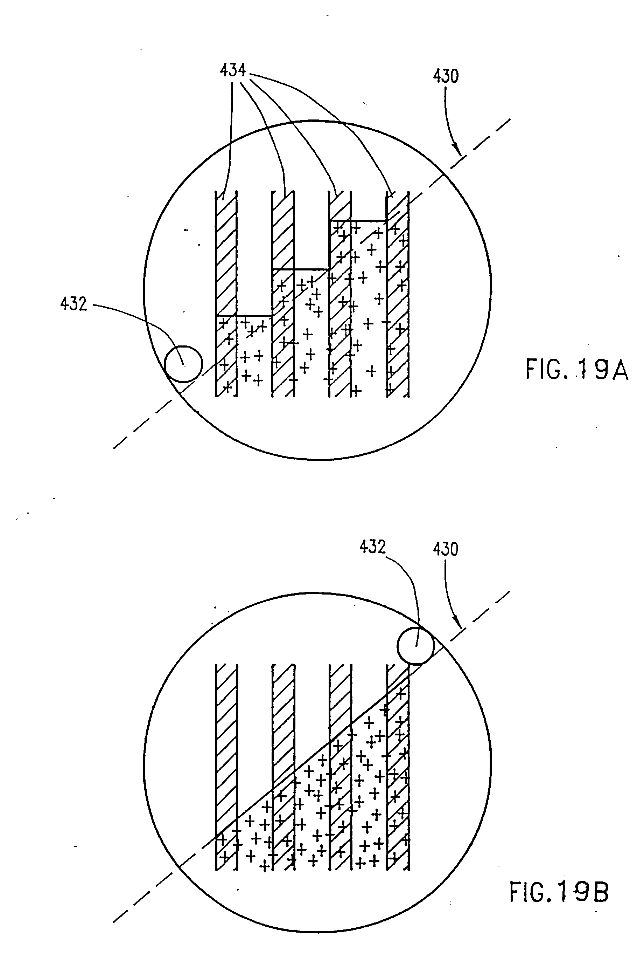

Fig. 18B illustrates charge pattern 420 after partial "touching up". Edge 422 has been smoothed by erasing charges using a charge source 426, which may be of the type described hereinabove in conjunction with Fig. 3. Inner edge 424 has been smoothed by adding charge. Both types of smoothing are carried out in accordance with the techniques described hereinbelow in conjunction with Figs. 19A and 19B.

Reference is now made to Figs. 19A and 19B which illustrate close ups views of edge 422 of Fig. 18A.

A line 430 of Fig. 19A is the outer edge that is to be achieved. Charge source 432 has not yet passed along edge 430. A conductive backing 434 is of the type described hereinabove, particularly in conjunction with Figs. 4A and 4B.

It is appreciated that if the voltage biasing the conductive backing beneath the location of the charge source is not zero, then charge will be added to the pattern at that location.

Alternately, if the voltage biasing the conductive backing beneath the location of the charge source is zero, then charge will be erased from the pattern at that location.

Fig. 19B illustrates line 430 subsequent to the pass of charge source 432. In accordance with the techniques of the present invention, charge was erased from the area outside of the border (above line 430). Areas over which the charge source did not pass (beneath line 430) are not affected.

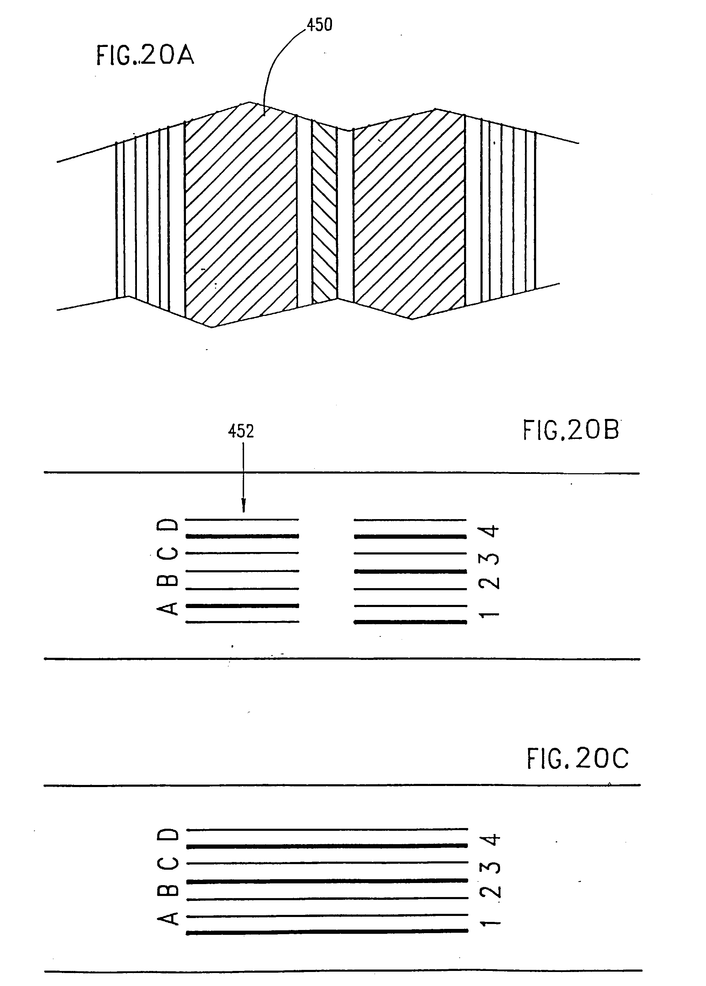

Reference is now made to Figs. 20A - 20C. which illustrate an alternate embodiment of the writing apparatus of Figs. 4A and 4B. According to the embodiment illustrated here, the strips of the conductive backing are not uniformly spaced or sized.

It is appreciated that many different configurations of the strips are permissible and the set-up is not limited to the configuration presented here.

The configuration presented here is designed to be compatible with the printing of uniform bar codes. The width of a strip 450 is chosen to be equal to the width of a section 452 of the bar code to be written.

It is appreciated that a reduction in the number of conductive strips simplifies the electronic driver mechanism.

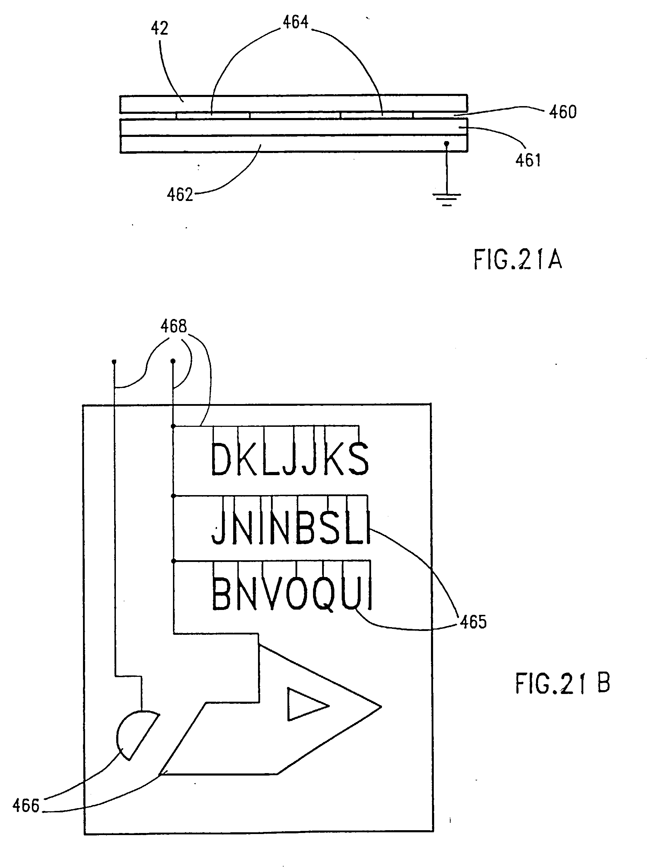

Reference is now made to Figs. 21A and 21B which illustrate a further embodiment of the writing apparatus of Figs. 4A and 4B.

In Fig. 21A, the strips (44 in Fig. 4A) are replaced by a substrate comprising a conductive backing 460 of predetermined configuration, an insulating dielectric layer 461, which lies intermediate the conductive backing 460 and a uniform conductive layer 462 which is grounded.

Fig. 21B provides a top view of pre-designed conductive backing 460 which comprises conductive areas containing text 465 and graphics 466. Additional conductive wires 468 connect text 465 and graphics areas 466 to voltage drivers (NOT SHOWN).

It is appreciated that during writing in accordance with the write techniques described hereinabove, particularly in conjunction with Fig. 3 - Fig. 5, a zero voltage is provided to the conductive backing 460 when the charge source is sweeping above the area of the conductive wires 468. When the charge source is sweeping the text 465 or graphic areas 466. the voltage supplied by the drivers to the conductive backing 460 is at a high level.

It is further appreciated that pre-design of the conductive backing may be useful in printing standard forms or other applications where a fixed master is necessary or where longevity of the master is important.

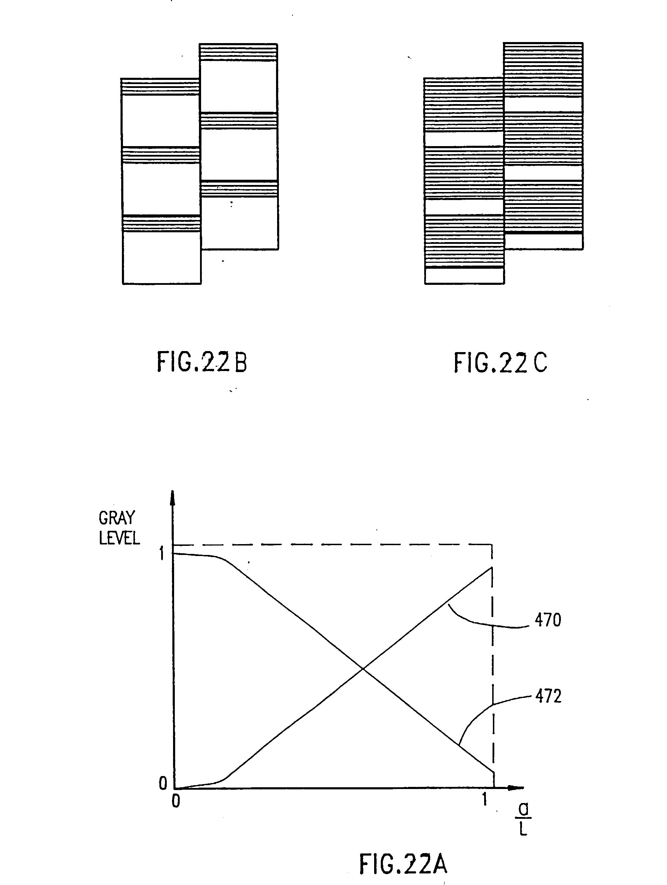

Reference is now made to Figs. 22A - 22C which illustrate a method for obtaining a continuum of monochrome gray levels by pseudo-half tones in accordance with an embodiment of the present invention.

Fig. 22A graphically represents monochromatic gray levels that can be achieved over an area as a function of the fractions of each of the pixels comprising that area that are toned. Pixels are charged and toned in accordance with the writing techniques described hereinabove particularly in conjunction with Figs. 3 - 5 and standard toning techniques.

It is appreciated that the dimension of a pixel in the direction of the sweep of the charge source may be represented by L. The dimension of a pixel in the second direction is determined by the width of the conductive strip associated with that pixel. (a/L) is the toning fraction, where a is a function of the velocity of the charge source multiplied by the effective time duration during which the bias voltage on the conductive strip is high during the writing of a single pixel.

Curve 470 illustrates one possible representation of gray levels that can be achieved by controlling the toning fraction of each pixel. In this representation, -the voltage biasing the conductive strip is zero at the beginning and end of a sweep of the pixel by a charge source. During the sweep, the voltage biasing the conductive strip is raised to a high level for a time duration in accordance with the desired toning fraction.

Curve 472 illustrates an alternate representation gray levels that can be achieved by controlling the toning fraction of each pixel. In this representation, the voltage biasing the conductive strip is at a high level at the beginning and end of a sweep of the pixel by a charge source. During. the sweep, the voltage biasing the conductive strip is reduced to zero for a time duration in accordance with desired toning fraction.

It is appreciated that a continuum of monochrome gray scales may be achieved for an area by selecting the appropriate voltages for the beginning and end of the sweep of each of the pixel locations comprising that area (following curve 470 or curve 472 depending upon the optical density desired).

Figs. 22B and 22C illustrate close-up views of the fractionally toned image of the pixels of two adjacent conductive strips (NOT SHOWN) where the pixels of one strip have been phase shifted with respect to the pixels of the second strip.

Two different gray scales are shown (Fig.22B and Fig. 22C). It is appreciated that the phase shift with respect to adjacent strips enabled by write techniques described hereinabove allows monochrome pseudo half-tone gray scales with high spatial frequency of pixel arrangements to be achieved.

It is further appreciated that continuous color shades can be achieved using color pseudo halftones. Color pseudo-half tones can be achieved in accordance with the techniques described hereinabove for creating monochromatic pseudo-half tones by varying the toning fraction of a pixel during each of four passes carried- out during standard multi-pass subtractive color printing.

It is appreciated that the write techniques described hereinabove, particularly in association with Figs. 3 - 5 provide a method for generating a charge pattern that contains charges of both polarities. It is understood that there exist toners which develop positive charge images and similarly there are other toners which develop negative charge images.

Therefore by using two different color toners which develop opposite polarity charge images, a two-color image may be produced in a single pass. The two-color image may contain any of a continuum of shades of the two colors, in accordance with the techniques for continuous toning described hereinabove, or alternately, in accordance with the techniques for pseudo half tones described hereinabove. One possible application for this technique is in the generation of "highlight" images.

It will be appreciated by persons skilled in the art that the present invention is not limited to what has been particularly shown and described hereinabove. Rather the scope of the present invention is defined only by the claims which follow:

## Claims

1. Apparatus for information transfer comprising:
a dielectric element (10, 30, 42, 72, 80, 180, 202, 308, 312, 364, 392, 402) having first (12, 82,) and second (18, 48, 84, 204, 306) surfaces;
at least one conductor (14, 16, 32, 34, 44,70, 73, 186, 216,304, 356, 434, 460, 468, 465, 466) associated with said first surface (12, 82,) of the dieletric element (10, 30, 42, 72, 80, 180, 202, 308, 312, 364, 392, 402), and
a charge source (20, 38, 46, 184, 215, 302, 432), the apparatus being characterized by:
said at least one conductor (14, 16, 32, 34, 44,70, 73, 186, 216,304, 356, 434, 460, 468, 465, 466) being operative for applying information bearing voltages in a time-dependent manner to given locations on a first surface (12, 82,) of the dielectric element (10, 30, 42, 72, 80, 180, 202, 308, 312, 364, 392, 402), thereby causing apparent surface voltages on the second surface (18, 48, 84, 204, 306) of said dielectric element (10, 30, 42, 72, 80, 180, 202, 308, 312, 364, 392, 402), and
said charge source (20, 38, 46, 184, 215, 302, 432) being an alternating polarity charge source for supplying a flow of non-visible charges of either polarity to the second surface (18, 48, 84, 204, 306) of said dielectric element (10, 30, 42, 72, 80, 180, 202, 308, 312, 364, 392, 402), wherein said flow is operative to temporarily neutralize the apparent surface voltages on said second surface (18, 48, 84, 204, 306), leaving on said second surface (18, 48, 84, 204, 306) a charge pattern corresponding to the information bearing voltages applied by said at least one conductor (14, 16, 32, 34, 44,70, 73, 186, 216,304, 356, 434, 460, 468, 465, 466).

2. Apparatus according to claim 1 wherein the arrangement is such that following the supply of charges in a time-dependent manner to given locations on the second surface (18, 48, 84, 204, 306) the quantity of the charge retained at each given location is related to the voltage applied to said given location at the time of ceasing the supply of charges thereto, whereby the time relationship between the applying of the voltage and the ceasing of the supply of charges provides an imagewise charge pattern on the dielectric element (10, 30, 42, 72, 80, 180, 202, 308, 312, 364, 392, 402).

3. Apparatus according to claim 1 or 2, further characterized in that said information bearing voltages comprise positive and negative levels, and said flow of non-visible charges is operative to transfer said information between said first (12, 82,) and second (18, 48, 84, 204, 306) surfaces creating a dual polarity charge pattern on said second surface (18, 48, 84, 204, 306).

4. Apparatus according to any of the preceding claims, and wherein said information bearing voltages comprise half-tone information and wherein said flow of charges is operative to transfer said half-tone information between said first (12, 82,) and second (18, 48, 84, 204, 306) surfaces.

5. Apparatus according to either of claims 1 and 2, further characterized in that said information bearing voltages include a continuum of voltage levels, and said flow of non-visible charges is operative to transfer information between said first (12, 82,) and second (18, 48, 84, 204, 306) surfaces creating a charge pattern containing a continuum of charge density levels on said second surface (18, 48, 84, 204, 306).

6. Apparatus according to claim 5, characterized in that said continuum of charge density levels correspond to optical density levels of toning materials and wherein different locations on said charge pattern contain different charge densities.

7. Apparatus for information transfer comprising:
a dielectric element (42, 72, 180)
a plurality of individual elements (44, 70. 73, 186, 356, 434, 460, 465, 466, 468), carrying time-dependent voltage signals representing a pattern, arranged in operative association with a first surface of said dielectric element; and
a charge source (46, 184) capable of providing alternating polarity non-visible charges, operative to apply a flow of charges to a second surface (48) of the dielectric substrate (42, 72, 180) and whereby as a result of application of charges, the second surface retains a charge pattern corresponding to the desired pattern represent by the voltage signals; the apparatus being characterized in that the charge source (42, 72, 180) includes a charge source assembly providing an edge defined charge flow and comprising:
an elongate source of positive and negative charges;
an elongate electrostatic shield disposed about said source of positive and negative charges forming a charge flow having at least one defined edge; and
wherein the two dimensional spatial resolution of said charge pattern is generally determined in one direction by said elongate edge and in a second dimension by said individual elements.

8. Apparatus according to any of claims 1 - 7 and further comprising a developing device (88, 205, 316, 394) operative to develop the charge pattern to provide a visible image.

9. Apparatus according to any of claims 1 - 7 and further comprising electronic means to provide said voltages in a time-dependent manner.

10. Apparatus according to any of the preceding claims wherein at least one conductor has a configuration corresponding to text, graphics or bar codes.

11. Apparatus according to claim 8 and further comprising transfer apparatus (94, 210, 212, 320, 322) operative to transfer said developed, visible image to a final print substrate (96, 208, 318).

12. Apparatus according to either of claims 8 or 11, and comprising fusing apparatus (214, 324) operative to fuse said developed, visible image to a final print substrate (96, 208, 318).

13. Apparatus according to any of claims 8, 11 or 12, and comprising an intermediate transfer member (94, 312).

14. Apparatus according to claim 7, and wherein said electrostatic shield is a biased conductive shield.

15. Apparatus according to claim 8, and wherein said bias is equal to a ground potential.

16. Apparatus according to any of claims 7, 14 - 15, and wherein said charge source comprises:
at least one elongate conductor coupled to at least one source of AC voltage;
a grounded conductive electrode in electrically insulative relationship with said at least one elongate conductor whereby said grounded electrode is disposed opposite said elongate conductor in a gas environment.

17. Apparatus according to claim 16, and wherein said grounded conductive electrode is in a gridlike shape.

18. Apparatus according to claim 16, and wherein said grounded conductive electrode comprises an elongate slot.

19. Apparatus according to any of the preceding claims, wherein said outer surface of said dielectric element is the outer surface of a drum.

20. Apparatus according to any of claims 1 - 18, wherein said dielectric element comprises a dielectric web (80, 180, 202, 308, 312, 392).

21. Apparatus according to any of claims 1 - 18, wherein said dielectric element comprises a dielectric belt (180, 202, 308, 312, 393).

22. Apparatus according to any of claims 1 - 6, and further comprising a dielectric support element wherein said at least one conductor is disposed intermediate the dielectric element (42) and a dielectric support element (Fig. 4B).

23. A method for information transfer employing information transfer apparatus comprising:
a dielectric element (10, 30, 42, 72, 80, 180, 202, 308, 312, 364, 392, 402) having first (12, 82,) and second (12, 82,) surfaces;
at least one conductor (14, 16, 32, 34, 44,70, 73, 186, 216,304, 356, 434, 460, 468, 465, 466) associated with the first surface (12, 82,) of the dielectric element (10, 30, 42, 72, 80, 180, 202, 308, 312, 364, 392, 402), and
a charge source (20, 38, 46, 184, 215, 302, 432), the method being characterized by:
employing said at least one conductor (14, 16, 32, 34, 44,70, 73, 186, 216,304, 356, 434, 460, 468, 465, 466) for applying information bearing voltages in a time-dependent manner to given locations on a first surface (12, 82,) of said dielectric element (10, 30, 42, 72, 80, 180, 202, 308, 312, 364, 392, 402), thereby causing apparent surface voltages on a second surface (18, 48, 84, 204, 306) of said dielectric element (10, 30, 42, 72, 80, 180, 202, 308, 312, 364, 392, 402), and
supplying a flow of non-visible alternating polarity charges to said second surface (18, 48, 84, 204, 306) of said dielectric element (10, 30, 42, 72, 80, 180, 202, 308, 312, 364, 392, 402), wherein said flow is operative to temporarily neutralize the apparent surface voltages on said second surface (18, 48, 84, 204, 306), leaving on the second surface a charge pattern corresponding to the information bearing voltages applied by said at least one conductor (14, 16, 32, 34, 44,70, 73, 186, 216,304, 356, 434, 460, 468, 465, 466).

24. A method according to claim 23 wherein following the supply of charges in a time-dependent manner to given locations on a second surface (18, 48, 84, 204, 306) the quantity of the charge retained at each given location is related to the voltage applied to said given location at the time of ceasing the supply of charges thereto, whereby the time relationship between the applying of the voltage and the ceasing of the supply of charges provides an imagewise charge pattern on the dielectric element (10, 30, 42, 72, 80, 180, 202, 308, 312, 364, 392, 402).

25. A method according to claim 23 or 24 and wherein said voltage supplied to said conductor (14, 16, 32, 34, 44,70, 73, 186, 216,304, 356, 434, 460, 468, 465, 466) comprises a continuum of voltage levels and said charge pattern contains a continuum of charge density levels.

26. A method for information transfer employing information transfer apparatus comprising;
a dielectric element (42, 72, 180)
a plurality of individual elements (44, 70. 73, 186, 356, 434, 460, 465, 466, 468), carrying time-dependent voltage signals representing a pattern, arranged in operative association with a first surface of said dielectric element; and
a charge source (46,184) including a charge source assembly providing an edge defined charge flow and comprising:
a source of positive and negative charges;
an elongate electrostatic shield disposed about said source of positive and negative charges forming a charge flow having at least one defined edge;
the method being characterized by;
employing said plurality of individual elements for applying time-dependent voltage signals to a first surface of said dielectric element (42, 72, 180), and
supplying a flow of alternating polarity non-visible charges to a second surface (48) of the dielectric substrate and whereby as a result of application of charges, the second surface (48) retains a charge pattern corresponding to the desired pattern represent by the voltage signals;
wherein the two dimensional spatial resolution of said charge pattern is generally determined in one direction by said elongate edge and in a second direction by said individual element.

27. A method according to any of claims 23-26 and also comprising the step of toning said charge pattern to provide a developed visible image.

28. A method according to claim 27 and also comprising the step of transferring said visible image to a final print substrate.

## Patentansprüche

1. Datenübertragungsvorrichtung, wobei die Vorrichtung folgendes umfaßt:
ein dielektrisches Element (10, 30, 42, 72, 80, 180, 202, 308, 312, 364, 392, 402) mit ersten (12, 82) und zweiten (18, 48, 84, 204, 306) Oberflächen;
mindestens einen Leiter (14, 16, 32, 34, 44, 70, 73, 186, 216, 304, 356, 434, 460, 468, 465, 466), der der genannten ersten Oberfläche (12, 82) des dielektrischen Elements (10, 30, 42, 72, 80, 180, 202, 308, 312, 364, 392, 402) zugeordnet ist; und
eine Ladungsquelle (20, 38, 46, 184, 215, 302, 432); wobei die Vorrichtung dadurch gekennzeichnet ist, daß:
der genannte mindestens eine Leiter (14, 16, 32, 34, 44, 70, 73, 186, 216, 304, 356, 434, 460, 468, 465, 466) so funktionsfähig ist, daß er Datenträgerspannungen zeitabhängig bestimmten Stellen auf einer ersten Oberfläche (12, 82) des dielektrischen Elements (10, 30, 42, 72, 80, 180, 202, 308, 312, 364, 392, 402) zuführen kann, wodurch scheinbare Oberflächenspannungen auf der zweiten Oberfläche (18, 48, 84, 204, 306) des dielektrischen Elements (10, 30, 42, 72, 80, 180, 202, 308, 312, 364, 392, 402) verursacht werden; und daß
es sich bei der genannten Ladungsquelle (20, 38, 46, 184, 215, 302, 432) um eine Ladungsquelle mit wechselnder Polarität handelt, so daß der zweiten Oberfläche (18, 48, 84, 204, 306) des genannten dielektrischen Elements (10, 30, 42, 72, 80, 180, 202, 308, 312, 364, 392, 402) ein Strom unsichtbarer Ladungen jeder Polarität zugeführt werden kann, wobei der genannte Strom die scheinbaren Oberflächenspannungen auf der genannten zweiten Oberfläche (18, 48, 84, 204, 306) vorübergehend neutralisieren kann, wobei auf der genannten zweiten Oberfläche (18, 48, 84, 204, 306) ein Ladungsbild verbleibt, das den Datenträgerspannungen entspricht, die von dem genannten mindestens einen Leiter (14, 16, 32, 34, 44, 70, 73, 186, 216, 304, 356, 434, 460, 468, 465, 466) zugeführt werden.

2. Vorrichtung nach Anspruch 1, wobei die Anordnung derart vorgesehen ist, daß nach der zeitabhängigen Ladungszufuhr an bestimmte Stellen auf der zweiten Oberfläche (18, 48, 84, 204, 306) die an jeder Stelle verbliebene Ladungsmenge im Verhältnis zu der Spannung steht, die der genannten bestimmten Stelle zu dem Zeitpunkt zugeführt wird, an dem die Ladungszufuhr aufhört, wodurch die zeitliche Beziehung zwischen der Spannungszufuhr und dem Ende der Zufuhr von Ladungen ein bildweises Ladungsmuster auf dem dielektrischen Element (10, 30, 42, 72, 80, 180, 202, 308, 312, 364, 392, 402) vorsieht.

3. Vorrichtung nach Anspruch 1 oder 2, ferner dadurch gekennzeichnet, daß die genannten Datenträgerspannungen positive und negative Pegel umfassen, und wobei der genannte Strom unsichtbarer Ladungen bewirkt, daß die genannten Daten zwischen den genannten ersten (12, 82) und zweiten (18, 48, 84, 204, 206) Oberflächen übertragen werden, wodurch auf der genannten zweiten Oberfläche (18, 48, 84, 204, 306) ein Ladungsbild mit doppelter Polarität erzeugt wird.

4. Vorrichtung nach einem der vorstehenden Ansprüche, und wobei die genannten Datenträgerspannungen Halbtoninformationen umfassen, und wobei der genannte Ladungsstrom die genannten Halbtoninformationen zwischen den genannten ersten (12, 82) und zweiten (18, 48, 84, 204, 306) Oberflächen überträgt.

5. Vorrichtung nach Anspruch 1 oder 2, ferner dadurch gekennzeichnet, daß die genannten Datenträgerspannungen ein Kontinuum von Spannungspegeln umfassen, und wobei der genannte Strom unsichtbarer Ladungen eine Datenübertragung zwischen den genannten ersten (12, 82) und zweiten (18, 48, 84, 204, 306) Oberflächen bewirkt, wodurch ein Ladungsbild erzeugt wird, das ein Kontinuum von Ladungsdichtepegeln auf der genannten zweiten Oberfläche (18, 48, 84, 204, 306) aufweist.

6. Vorrichtung nach Anspruch 5, dadurch gekennzeichnet, daß das genannte Kontinuum von Ladungsdichtepegeln Schwärzungswerten von Tonungsstoffen entspricht, und wobei verschiedene Stellen auf dem genannten Ladungsbild verschiedene Ladungsdichten aufweisen.

7. Datenübertragungsvorrichtung, wobei die Vorrichtung folgendes umfaßt:
ein dielektrisches Element (42, 72, 180);
eine Mehrzahl einzelner Elemente (44, 70, 73, 186, 356, 434, 460, 465, 466, 468), die zeitabhängige Spannungssignale tragen, welche ein Bild bzw. ein Muster darstellen, das operativ einer ersten Oberfläche des genannten dielektrischen Elements zugeordnet ist; und
eine Ladungsquelle (46, 184), die unsichtbare Ladungen mit wechselnder Polarität vorsehen kann, um funktionsfähig einer zweiten Oberfläche (48) des dielektrischen Substrats (42, 72, 180) einen Ladungsstrom zuzuführen, und wobei die zweite Oberfläche als Reaktion auf die Ladungszufuhr ein Ladungsbild hält, das dem gewünschten Bild entspricht, das durch die Spannungssignale dargestellt wird; wobei die Vorrichtung dadurch gekennzeichnet ist, daß die Ladungsquelle (42, 72, 180) einen Ladungsquellenzusammenbau umfaßt, der einen flankendefinierten Ladungsstrom vorsieht, und mit:
einer elongierten Quelle positiver und negativer Ladungen; einer elongierten, elektrostatischen Abschirmung, die um die genannte Quelle positiver und negativer Ladungen angeordnet ist, wobei ein Ladungsstrom mit mindestens einer definierten Flanke gebildet wird; und wobei
die zweidimensionale räumliche Auflösung des genannten Ladungsbilds allgemein in eine Richtung durch die genannte elongierte Flanke und in eine zweite Dimension durch die genannten einzelnen Elemente bestimmt wird.

8. Vorrichtung nach einem der Ansprüche 1 bis 7, wobei die Vorrichtung ferner eine Entwicklungseinrichtung (88, 205, 316, 394) umfaßt, die die Ladungsbilder entwickeln kann, so daß ein sichtbares Bild vorgesehen wird.

9. Vorrichtung nach einem der Ansprüche 1 bis 7, wobei die Vorrichtung ferner eine elektronische Einrichtung umfaßt, die dazu dient, die genannten Spannungen zeitabhängig vorzusehen.

10. Vorrichtung nach einem der vorstehenden Ansprüche, wobei mindestens ein Leiter eine Konfiguration aufweist, die Text, Graphiken oder Strichcodes entspricht.

11. Vorrichtung nach Anspruch 8, wobei die Vorrichtung ferner eine Übertragungsvorrichtung (94, 210, 212, 320, 322) umfaßt, die das genannte entwickelte, sichtbare Bild auf ein letztendliches Drucksubstrat (96, 208, 318) überträgt.

12. Vorrichtung nach einem der Ansprüche 8 bis 11, wobei die Vorrichtung ferner eine Fixierungsvorrichtung (214, 324) umfaßt, die das genannte entwickelte, sichtbare Bild auf einem letztendlichen Drucksubstrat (96, 208, 318) fixiert.

13. Vorrichtung nach einem der Ansprüche 8, 11 oder 12, wobei die Vorrichtung ferner ein Zwischenübertragungselement (94, 312) umfaßt.

14. Vorrichtung nach Anspruch 7, wobei es sich bei der genannten elektrostatischen Abschirmung um eine vorgespannte leitfähige Abschirmung handelt.

15. Vorrichtung nach Anspruch 8, wobei die genannte Vorspannung einem Erdpotential entspricht.

16. Vorrichtung nach einem der Ansprüche 7, 14 oder 15, wobei die genannte Ladungsquelle folgendes umfaßt:
mindestens einen elongierten Leiter, der mit mindestens einer Wechselstromquelle gekoppelt ist;
eine geerdete, leitfähige Elektrode, die im elektrisch isolierenden Verhältnis zu dem genannten mindestens einen elongierten Leiter steht, wobei die genannte geerdete Elektrode bzw. Basiselektrode in einer Gasumgebung entgegengesetzt zu dem genannten elongierten Leiter angeordnet ist.

17. Vorrichtung nach Anspruch 16, wobei die genannte geerdete, leitfähige Elektrode gitterförmig ist.

18. Vorrichtung nach Anspruch 16, wobei die genannte geerdete, leitfähige Elektrode einen Langschlitz umfaßt.

19. Vorrichtung nach einem der vorstehenden Ansprüche, wobei es sich bei der genannten äußeren Oberfläche des genannten dielektrischen Elements um die äußere Oberfläche einer Trommel handelt.

20. Vorichtung nach einem der Ansprüche 1 bis 18, wobei das genannte dielektrische Element eine dielektrische Bahn (80, 180, 202, 308, 312, 392) umfaßt.

21. Vorrichtung nach einem der Ansprüche 1 bis 18, wobei das genannte dielektrische Element ein dielektrisches Band (180, 202, 308, 312, 393) umfaßt.

22. Vorrichtung nach einem der Ansprüche 1 bis 16, wobei die Vorrichtung ferner ein dielektrisches Trägerelement umfaßt, wobei sich der genannte mindestens eine Leiter zwischen dem dielektrischen Element (42) und einem dielektrischen Trägerelement (Figur 4B) befindet.

23. Verfahren zur Datenübertragung, bei dem eine Datenübertragungsvorrichtung eingesetzt wird, die folgendes umfaßt:
ein dielektrisches Element (10, 30, 42, 72, 80, 180, 202, 308, 312, 364, 392, 402) mit ersten (12, 82) und zweiten (18, 48, 84, 204, 306) Oberflächen;
mindestens einen Leiter (14, 16, 32, 34, 44, 70, 73, 186, 216, 304, 356, 434, 460, 468, 465, 466), der der ersten Oberfläche (12, 82) des dielektrischen Elements (10, 30, 42, 72, 80, 180, 202, 308, 312, 364, 392, 402) zugeordnet ist; und
eine Ladungsquelle (20, 38, 46, 184, 215, 302, 432); wobei das Verfahren durch folgende Schritte gekennzeichnet ist:
Einsatz des genannten mindestens einen Leiters (14, 16, 32, 34, 44, 70, 73, 186, 216, 304, 356, 434, 460, 468, 465, 466) für die zeitabhängige Zufuhr von Datenträgerspannungen an bestimmte Stellen auf einer ersten Oberfläche (12, 82) des genannten dielektrischen Elements (10, 30, 42, 72, 80, 180, 202, 308, 312, 364, 392, 402), wodurch auf einer zweiten Oberfläche (18, 48, 84, 204, 306) des genannten dielektrischen Elements (10, 30, 42, 72, 80, 180, 202, 308, 312, 364, 392, 402) scheinbare Oberflächenspannungen verursacht werden; und
Zufuhr eines Stroms unsichtbarer Ladungen mit wechselnder Polarität an die genannte zweite Oberfläche (18, 48, 84, 204, 306) des genannten dielektrischen Elements (10, 30, 42, 72, 80, 180, 202, 308, 312, 364, 392, 402), wobei der genannte Strom die scheinbaren Oberflächenspannungen auf der genannten zweiten Oberfläche (18, 48, 84, 204, 306) vorübergehend neutralisiert, wobei auf der zweiten Oberfläche ein Ladungsbild verbleibt, das den Datenträgerspannungen entspricht, die von dem genannten mindestens einen Leiter (14, 16, 32, 34, 44, 70, 73, 186, 216, 304, 356, 434, 460, 468, 465, 466) zugeführt werden.

24. Verfahren nach Anspruch 23, wobei nach der zeitabhängigen Ladungszufuhr an bestimmte Stellen auf der genannten zweiten Oberfläche (18, 48, 84, 204, 306) die an jeder Stelle verbliebene Ladungsmenge ins Verhältnis zu der Spannung gesetzt wird, die der genannten bestimmten Stelle zu dem Zeitpunkt zugeführt wird, an dem die Ladungszufuhr aufhört, wodurch die zeitliche Beziehung zwischen der Spannungszufuhr und dem Ende der Zufuhr von Ladungen ein bildweises Ladungsmuster auf dem dielektrischen Element (10, 30, 42, 72, 80, 180, 202, 308, 312, 364, 392, 402) vorsieht.

25. Verfahren nach Anspruch 23 oder 24, wobei die genannte Spannung, die dem genannten Leiter (14, 16, 32, 34, 44, 70, 73, 186, 216, 304, 356, 434, 460, 468, 465, 466) zugeführt wird, ein Kontinuum von Spannungspegeln umfaßt, und wobei das genannte Ladungsbild ein Kontinuum von Ladungsdichtewerten aufweist.

26. Verfahren zur Datenübertragung, bei dem eine Datenübertragungsvorrichtung eingesetzt wird, wobei die Vorrichtung folgendes umfaßt:
ein dielektrisches Element (42, 72, 180);
eine Mehrzahl einzelner Elemente (44, 70, 73, 186, 356, 434, 460, 465, 466, 468), die zeitabhängige Spannungssignale tragen, welche ein Bild darstellen, das operativ einer ersten Oberfläche des genannten dielektrischen Elements zugeordnet ist; und
eine Ladungsquelle (46, 184), die einen Ladungsquellenzusammenbau aufweist, der einen flankendefinierten Ladungsstrom vorsieht, und mit:
einer Quelle positiver und negativer Ladungen;
eine elongierte, elektrostatische Abschirmung, die um die genannte Quelle positiver und negativer Ladungen angeordnet ist, wobei ein Ladungsstrom mit mindestens einer definierten Flanke gebildet wird;
wobei das Verfahren dadurch gekennzeichnet ist, daß:
die genannte Mehrzahl einzelner Elemente dazu eingesetzt wird, einer ersten Oberfläche des genannten dielektrischen Elements (42, 72, 180) zeitabhängige Spannungssignale zuzuführen; und daß
ein Strom unsichtbarer Ladungen mit wechselnder Polarität einer zweiten Oberfläche (48) des dielektrischen Substrats zugeführt wird, und wobei die zweite Oberfläche (48) als Folge der Ladungszufuhr ein Ladungsbild hält, das dem gewünschten Bild entspricht, das durch die Spannungssignale dargestellt wird;
wobei die zweidimensionale Auflösung des genannten Ladungsbilds allgemein in eine Richtung durch die genannte elongierte Flanke und in eine zweite Richtung durch das genannte einzelne Element bestimmt wird.

27. Verfahren nach einem der Ansprüche 23 bis 26, wobei das Verfahren ferner den Schritt der Tonung des genannten Ladungsbilds umfaßt, um ein entwickeltes, sichtbares Bild vorzusehen.

28. Verfahren nach Anspruch 27, wobei das Verfahren ferner den Schritt der Übertragung des genannten sichtbaren Bilds auf ein letztendliches Drucksubstrat umfaßt.

## Revendications

1. Appareil pour le transfert d'informations comprenant :
un élément diélectrique (10, 30, 42, 72, 80, 180, 202, 308, 312, 364, 392, 402) ayant des première (12, 82) et seconde (18, 48, 84, 204, 306) surfaces ;
au moins un conducteur (14, 16, 32, 34, 44, 70, 73, 186, 216, 304, 356, 434, 460, 468, 465, 466) associé à ladite première surface (12, 82) de l'élément diélectrique (10, 30, 42, 72, 80, 180, 202, 308, 312, 364, 392, 402), et
une source de charge (20, 38, 46, 184, 215, 302, 432), l'appareil étant caractérisé par :
ledit au moins un conducteur (14, 16, 32, 34, 44, 70, 73, 186, 216, 304, 356, 434, 460, 468, 465, 466) agissant pour appliquer des tensions portant des informations, d'une manière dépendante du temps, à des emplacements donnés sur une première surface (12, 82) de l'élément diélectrique (10, 30, 42, 72, 80, 180, 202, 308, 312, 364, 392, 402), provoquant ainsi des tensions de surface apparentes sur la seconde surface (18, 48, 84, 204, 306) dudit élément diélectrique (10, 30, 42, 72, 80, 180, 202, 308, 312, 364, 392, 402), et
ladite source de charge (20, 38, 46, 184, 215, 302, 432) étant une source de charge de polarité alternative permettant de fournir un flux de charges non visibles de l'une ou l'autre polarité à la seconde surface (18, 48, 84, 204, 306) dudit élément diélectrique (10, 30, 42, 72, 80, 180, 202, 308, 312, 364, 392, 402), dans lequel ledit flux agit pour neutraliser temporairement les tensions de surface apparentes sur ladite seconde surface (18, 48, 84, 204, 306), laissant sur ladite seconde surface (18, 48, 84, 204, 306) une image électronique de charge correspondant aux tensions portant des informations appliquées par ledit au moins un conducteur (14, 16, 32, 34, 44, 70, 73, 186, 216, 304, 356, 434, 460, 468, 465, 466).

2. Appareil selon la revendication 1 dans lequel la disposition est telle qu'après la fourniture de charge réalisée d'une manière dépendante du temps à des emplacements donnés sur la seconde surface (18, 48, 84, 204, 306), la quantité de charge conservée à chaque emplacement donné est liée à la tension appliquée audit emplacement donné au moment de l'arrêt de la fourniture de charges à celui-ci, grâce à quoi la relation de temps entre l'application de la tension et l'arrêt de la fourniture de charges procure une image électronique de charge semblable à une image sur l'élément diélectrique (10, 30, 42, 72, 80, 180, 202, 308, 312, 364, 392, 402).

3. Appareil selon la revendication 1 ou 2, caractérisé en outre en ce que lesdites tensions portant des informations comprennent des niveaux positifs et négatifs, et que ledit flux de charges non visibles agit pour transférer lesdites informations entre lesdites première (12, 82) et seconde (18, 48, 84, 204, 306) surfaces en créant une image électronique de charge de polarité double sur ladite seconde surface (18, 48, 84, 204, 306).

4. Appareil selon l'une quelconque des revendications précédentes, et dans lequel lesdites tensions portant des informations comprennent des informations de demi-ton, et dans lequel ledit flux de charges agit pour transférer lesdites informations de demi-ton entre lesdites première (12, 82) et seconde (18, 48, 84, 204, 306) surfaces.

5. Appareil selon l'une ou l'autre des revendications 1 et 2, caractérisé en outre en ce que lesdites tensions portant des informations comprennent un continuum de niveaux de tension, et en ce que ledit flux de charges non visibles agit pour transférer des informations entre lesdites première (12, 82) et seconde (18, 48, 84, 204, 306) surfaces en créant une image électronique de charge contenant un continuum de niveaux de densité de charge sur ladite seconde surface (18, 48, 84, 204, 306).

6. Appareil selon la revendication 5, caractérisé en ce que ledit continuum de niveaux de densité de charge correspond aux niveaux de densité optique des matériels de réglage de tonalité et dans lequel différents emplacements sur ladite image électronique de charge contiennent différentes densités de charge.

7. Appareil pour le transfert d'informations comprenant :
un élément diélectrique (42 ,72, 180) ;
une pluralité d'éléments individuels (44, 70, 73, 186, 356, 434, 460, 465, 466, 468), transportant des signaux de tension dépendant du temps et représentant un schéma, disposés en association fonctionnelle avec une première surface dudit élément diélectrique ; et
une source de charge (46, 184) capable de fournir des charges non visibles de polarité alternative, agissant pour appliquer un flux de charges à une seconde surface (48) du substrat diélectrique (42, 72, 180) et grâce à quoi, suite à l'application de charges, la seconde surface conserve une image électronique de charge correspondant au schéma voulu représenté par les signaux de tension ; l'appareil étant caractérisé en ce que la source de charge (42, 72, 180) comporte un montage de source de charge procurant un flux de charge à bord défini et comprenant :
une source allongée de charges positives et négatives ;
un écran électrostatique allongé disposé autour de ladite source de charges positives et négatives formant un flux de charge ayant au moins un bord défini ; et
dans lequel la résolution spatiale à deux dimensions de ladite image électronique de charge est généralement déterminée dans une direction par ledit bord allongé et dans une, seconde direction par lesdits éléments individuels.

8. Appareil selon l'une quelconque des revendications 1 à 7 et comprenant en outre un dispositif de développement (88, 205, 316, 394) agissant pour développer l'image électronique de charge afin de fournir une image visible.

9. Appareil selon l'une quelconque des revendications 1 à 7 et comprenant en outre des moyens électroniques permettant de fournir lesdites tensions d'une manière dépendante du temps.

10. Appareil selon l'une quelconque des revendications précédentes dans lequel au moins un conducteur a une configuration correspondant au texte, aux graphiques ou aux codes barres.

11. Appareil selon la revendication 8 et comprenant en outre un appareil de transfert (94, 210, 212, 320, 322) agissant pour transférer ladite image développée et visible vers un substrat d'impression finale (96, 208, 318).

12. Appareil selon l'une ou l'autre des revendications 8 ou 11, et comprenant un appareil de fusion (214, 324) agissant pour fusionner ladite image développée et visible vers un substrat d'impression finale (96, 208, 318).

13. Appareil selon l'une quelconque des revendications 8, 11 ou 12, et comprenant un élément de transfert intermédiaire (94, 312).

14. Appareil selon la revendication 7, et dans lequel ledit écran électrostatique est un écran conducteur à polarisation.

15. Appareil selon la revendication 8, et dans lequel ladite polarisation est égale à un potentiel de terre.

16. Appareil selon l'une quelconque des revendications 7, 14 et 15, et dans lequel ladite source de charge comprend :
au moins un conducteur allongé couplé à au moins une source de tension de courant alternatif ;
une électrode conductrice mise à la terre en relation électriquement isolante avec au moins un conducteur allongé, grâce à quoi ladite électrode mise à la terre est disposée en face dudit conducteur allongé dans un environnement gazeux.

17. Appareil selon la revendication 16 et dans lequel ladite électrode conductrice mise à la terre se présente sous la forme d'une grille.

18. Appareil selon la revendication 16 et dans lequel ladite électrode conductrice mise à la terre comprend une fente allongée.

19. Appareil selon l'une quelconque des revendications précédentes, dans lequel ladite surface externe dudit élément diélectrique est la surface externe d'un tambour.

20. Appareil selon l'une quelconque des revendications 1 à 18, dans lequel ledit élément diélectrique comprend une trame diélectrique (80, 180, 202, 308, 312, 392).

21. Appareil selon l'une quelconque des revendications 1 à 18, dans lequel ledit élément diélectrique comprend une ceinture diélectrique (180, 202, 308, 312, 393).

22. Appareil selon l'une quelconque des revendications 1 à 6 et comprenant en outre un élément de support diélectrique dans lequel ledit au moins un conducteur est disposé en position intermédiaire entre l'élément diélectrique (42) et un élément de support diélectrique (figure 4B).

23. Méthode pour le transfert d'informations utilisant l'appareil pour le transfert d'informations et comprenant :
un élément diélectrique (10, 30, 42, 72, 80, 180, 202, 308, 312, 364, 392, 402) ayant des première (12, 82) et seconde (18, 48, 84, 204, 306) surfaces ;
au moins un conducteur (14, 16, 32, 34, 44, 70, 73, 186, 216, 304, 356, 434, 460, 468, 465, 466) associé à la première surface (12, 82) de l'élément diélectrique (10, 30, 42, 72, 80, 180, 202, 308, 312, 364, 392, 402), et
une source de charge (20, 38, 46, 184, 215, 302, 432), la méthode étant caractérisée par :
le fait d'utiliser ledit au moins un conducteur (14, 16, 32, 34, 44, 70, 73, 186, 216, 304, 356, 434, 460, 468, 465, 466) pour appliquer des tensions portant des informations d'une manière dépendante du temps à des emplacements donnés sur une première surface (12, 82) dudit élément diélectrique (10, 30, 42, 72, 80, 180, 202, 308, 312, 364, 392, 402), provoquant ainsi des tensions de surface apparentes sur une seconde surface (18, 48, 84, 204, 306) dudit élément diélectrique (10, 30, 42, 72, 80, 180, 202, 308, 312, 364, 392, 402), et
le fait de fournir un flux de charges non visibles de polarité alternative à ladite seconde surface (18, 48, 84, 204, 306) dudit élément diélectrique (10, 30, 42, 72, 80, 180, 202, 308, 312, 364, 392, 402), dans lequel ledit flux agit pour neutraliser temporairement les tensions de surface apparentes sur ladite seconde surface (18, 48, 84, 204, 306), laissant sur ladite seconde surface une image électronique de charge correspondant aux tensions portant des informations appliquées par un conducteur susmentionné au moins (14, 16, 32, 34, 44, 70, 73, 186, 216, 304, 356, 434, 460, 468, 465, 466).

24. Méthode selon la revendication 23, dans laquelle, après la fourniture de charges réalisée d'une manière dépendante du temps à des emplacements donnés d'une seconde surface (18, 48, 84, 204, 306), la quantité de la charge conservée à chaque emplacement donné est liée à la tension appliquée audit emplacement donné au moment de l'arrêt de la fourniture de charges à celui-ci, grâce à quoi la relation de temps entre l'application de la tension et l'arrêt de la fourniture de charges procure une image électronique de charge semblable à une image sur l'élément diélectrique (10, 30, 42, 72, 80, 180, 202, 308, 312, 364, 392, 402).

25. Méthode selon la revendication 23 ou 24 et dans laquelle ladite tension fournie audit conducteur (14, 16, 32, 34, 44, 70, 73, 186, 216, 304, 356, 434, 460, 468, 465, 466) comprend un continuum de niveaux de tension et ladite image électronique de charge contient un continuum de niveaux de densité de charge.

26. Méthode pour le transfert d'informations utilisant un appareil pour le transfert d'informations comprenant :
un élément diélectrique (42 ,72, 180) ;
une pluralité d'éléments individuels (44, 70, 73, 186, 356, 434, 460, 465, 466, 468), transportant des signaux de tension dépendant du temps et représentant un schéma, disposés en association fonctionnelle avec une première surface dudit élément diélectrique ; et
une source de charge (46, 184) comprenant un montage de source de charge procurant un flux de charge à bord défini et comprenant :
une source de charges positives et négatives ;
un écran électrostatique allongé disposé autour de ladite source de charges positives et négatives formant un flux de charge ayant au moins un bord défini ;
la méthode étant caractérisée par :
le fait d'utiliser ladite pluralité d'éléments individuels pour appliquer des signaux de tensions dépendant du temps à une première surface dudit élément diélectrique (42, 72, 180), et
le fait de fournir un flux de charges non visibles de polarité alternative à une seconde surface (48) du substrat diélectrique et grâce à quoi, suite à l'application de charges, la seconde surface (48) conserve une image électronique de charge correspondant au schéma voulu représenté par les signaux de tension ;
dans laquelle la résolution spatiale à deux dimensions de ladite image électronique de charge est généralement déterminée dans une direction par ledit bord allongé et dans une seconde direction par ledit élément individuel.

27. Méthode selon l'une quelconque des revendications 23 à 26 et comprenant également l'étape consistant à régler la tonalité de ladite image électronique de charge afin de procurer une image développée visible.

28. Méthode selon la revendication 27 et comprenant également l'étape consistant à transférer ladite image visible vers un substrat d'impression finale.
